(19) Europäisches Patentamt
European Patent Office
Office européen des brevets

(11) **EP 3 554 826 B1**

(12) **FASCICULE DE BREVET EUROPEEN**

(45) Date de publication et mention de la délivrance du brevet:
**11.11.2020 Bulletin 2020/46**

(21) Numéro de dépôt: **17821986.1**

(22) Date de dépôt: **13.12.2017**

(51) Int Cl.:
*B32B 17/06* (2006.01)   *B32B 7/02* (2019.01)
*G03B 21/60* (2014.01)   *G02B 5/02* (2006.01)
*B32B 17/10* (2006.01)

(86) Numéro de dépôt international:
**PCT/FR2017/053538**

(87) Numéro de publication internationale:
**WO 2018/109375 (21.06.2018 Gazette 2018/25)**

(54) **ELEMENT EN COUCHES TRANSPARENT COMPORTANT UNE ZONE ECRAN**

TRANSPARENTES GESCHICHTETES ELEMENT MIT EINEM ANZEIGEBEREICH

TRANSPARENT LAYERED ELEMENT COMPRISING A DISPLAY REGION

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**
Etats de validation désignés:
**MA**

(30) Priorité: **13.12.2016 FR 1662388**

(43) Date de publication de la demande:
**23.10.2019 Bulletin 2019/43**

(73) Titulaire: **SAINT-GOBAIN GLASS FRANCE**
**92400 Courbevoie (FR)**

(72) Inventeurs:
• **SCHIAVONI, Michele**
  **75014 Paris (FR)**
• **OZANAM, Cécile**
  **91120 Palaiseau (FR)**
• **GAYOUT, Patrick**
  **93250 Villemomble (FR)**

(74) Mandataire: **Saint-Gobain Recherche**
**B.P. 135**
**39, quai Lucien Lefranc**
**93303 Aubervilliers Cedex (FR)**

(56) Documents cités:
**EP-A2- 0 415 230**      **EP-A2- 0 506 560**
**WO-A1-2013/175129**   **WO-A1-2015/063418**
**US-A- 4 818 045**        **US-A1- 2002 008 926**
**US-A1- 2005 141 087**   **US-A1- 2008 075 923**
**US-A1- 2015 241 603**

## Description

### DOMAINE TECHNIQUE DE L'INVENTION

Le domaine technique de l'invention est celui des vitrages transparents comprenant un élément en couches transparent à propriétés de réflexion diffuse définissant au moins une zone écran pouvant servir d'écran de projection ou de rétroprojection. De tels vitrages transparents pouvant servir d'écrans de projection ou de rétroprojection trouvent application, notamment, dans le domaine des transports, par exemple pour la réalisation de vitrages d'avions, de trains, de véhicules automobiles (voitures, camions, etc.), en particulier des pare-brises, vitrages latéraux ou vitrages de toit.

### ARRIERE-PLAN TECHNOLOGIQUE DE L'INVENTION

Les vitrages connus comprennent les vitrages transparents standards, qui donnent lieu à une transmission et une réflexion spéculaires d'un rayonnement incident sur le vitrage, et les vitrages translucides, qui donnent lieu à une transmission et une réflexion diffuses d'un rayonnement incident sur le vitrage.

De manière usuelle, la réflexion par un vitrage est dite diffuse lorsqu'un rayonnement incident sur le vitrage avec un angle d'incidence donné est réfléchi par le vitrage dans une pluralité de directions. La réflexion par un vitrage est dite spéculaire lorsqu'un rayonnement incident sur le vitrage avec un angle d'incidence donné est réfléchi par le vitrage avec un angle de réflexion sensiblement égal à l'angle d'incidence. De manière analogue, la transmission à travers un vitrage est dite spéculaire lorsqu'un rayonnement incident sur le vitrage avec un angle d'incidence donné est transmis par le vitrage avec un angle de transmission sensiblement égal à l'angle d'incidence.

Un écran de projection comporte deux faces ou surfaces principales, à savoir une première face sur laquelle est projetée l'image provenant de la source lumineuse positionnée dans la même région de l'espace que la source lumineuse (projection directe) et une deuxième face opposée sur laquelle apparaît éventuellement par transparence l'image projetée sur la première face.

Un écran de rétroprojection dispose d'une première face et d'une deuxième face opposée possédant les mêmes caractéristiques que celles des écrans de projection précédemment mentionnés. En revanche, un écran de rétroprojection se différencie d'un écran de projection par le fait que l'utilisateur et la source lumineuse ne sont pas situés dans la même région de l'espace mais se trouvent de part et d'autre de l'écran. La rétroprojection implique de placer le projecteur derrière le vitrage.

Dans ce qui suit, sauf précision contraire, le terme "projection" est utilisé de manière générale pour désigner à la fois la projection et la rétroprojection.

L'utilisation de vitrages standards transparents en tant qu'écrans de projection n'est pas envisageable. En effet, ces vitrages ne présentent pas de propriété de réflexion diffuse, ils ne permettent donc pas de former des images sur l'une quelconque de leurs faces et renvoient des reflets nets à la manière de miroirs.

De nombreuses tentatives ont été réalisées pour conférer à des vitrages standards transparents des propriétés supplémentaires permettant leur utilisation comme écran de projection, tout en maintenant une vision nette à travers le vitrage.

WO 2013/175129 A1 décrit un vitrage comprenant un élément en couches transparent à propriétés de réflexion diffuse permettant la projection d'images, visibles avec un grand angle de vue, tout en maintenant la transparence du vitrage. Il a toutefois été constaté qu'avec un tel vitrage, dans certaines conditions d'utilisation, notamment lorsque le contraste lumineux n'est pas suffisamment marqué entre les deux côtés du vitrage, un observateur placé du côté le moins lumineux perçoit une impression de flou ou de "vitrage laiteux" qui limite la netteté de la vision. Pour certaines applications, notamment dans le domaine automobile, ces aspects flous et laiteux, même s'ils sont faibles, peuvent être considérés comme inacceptables dans des zones de vision.

C'est à ces inconvénients qu'entend plus particulièrement remédier l'invention en proposant un vitrage transparent qui permet la projection d'images et qui satisfait aux critères de vision nette imposés notamment dans le domaine des transports, tout en ayant un aspect globalement uniforme.

### RESUME DE L'INVENTION

A cet effet, l'invention a pour objet un élément en couches transparent comprenant deux couches externes transparentes ayant sensiblement le même indice de réfraction et ayant chacune une surface principale externe lisse, l'élément en couches comportant :

- une zone écran à propriétés de réflexion diffuse et transmission spéculaire comportant une couche centrale texturée intercalée entre les couches externes, qui définit des surfaces de contact texturées, parallèles entre elles, ayant une pente quadratique moyenne Rdq strictement supérieure à 0,2°, la couche centrale de la zone écran comportant au moins une couche transparente d'indice de réfraction différent de celui des couches externes ou une couche métallique, et

- une zone périphérique à propriétés de réflexion spéculaire et transmission spéculaire,

caractérisé en ce que l'élément en couches comporte une zone de transition à propriétés de réflexion diffuse et transmission spéculaire entre la zone écran et la zone périphérique, la zone de transition comprenant une couche centrale texturée intercalée entre les couches externes, qui définit des surfaces de contact texturées, parallèles entre elles, ayant une pente quadratique moyenne Rdq strictement supérieure à 0,2°, la couche centrale de la zone de transition comportant au moins une couche transparente d'indice de réfraction différent de celui des couches externes ou une couche métallique,

et en ce que, de chaque côté de l'élément en couches, la réflexion lumineuse diffuse en tout point de la zone de transition est inférieure ou égale à la réflexion lumineuse diffuse en tout point de la zone écran et l'évolution de la réflexion lumineuse diffuse dans la zone de transition depuis la zone écran vers la zone périphérique, dans toute direction reliant la zone écran à la zone périphérique, est décroissante ou telle que la courbe passant par la valeur de réflexion lumineuse diffuse à la jonction de la zone de transition avec la zone écran et par le ou chaque maximum local de l'évolution de la réflexion lumineuse diffuse dans la zone de transition est décroissante, la décroissance de l'évolution de la réflexion lumineuse diffuse dans la zone de transition, ou de la courbe passant par le ou chaque maximum local de l'évolution de la réflexion lumineuse diffuse dans la zone de transition, étant obtenue par variation d'au moins un paramètre parmi la pente quadratique moyenne et la réflexion lumineuse totale de la couche centrale de la zone de transition, dans toute direction reliant la zone écran à la zone périphérique.

Dans le cadre de l'invention, la réflexion lumineuse diffuse en un point d'une zone est la moyenne de la réflexion lumineuse diffuse sur une surface de référence centrée en ce point et dont la dimension est le maximum parmi 1mm x 1mm et 3Rsm x 3Rsm, avec Rsm la largeur moyenne des éléments du profil de rugosité de la couche centrale de la zone.

Au sens de l'invention, un maximum local d'une évolution est un point de l'évolution pour lequel la dérivée est nulle et l'évolution est croissante avant ce point puis décroissante après ce point. De plus, au sens de l'invention, une évolution ou une courbe est décroissante si, pour deux points successifs de cette évolution ou de cette courbe, la valeur du point suivant est inférieure ou égale à la valeur du point précédent.

Dans le cadre de l'invention, la réflexion ou la transmission par une zone est dite spéculaire lorsqu'un rayonnement incident sur la zone avec un angle d'incidence donné est réfléchi ou transmis par la zone avec une déviation d'angle inférieur ou égal à 2,5° par rapport au rayonnement incident. A contrario, la réflexion ou la transmission par une zone est dite diffuse lorsqu'un rayonnement incident sur la zone avec un angle d'incidence donné est réfléchi ou transmis par la zone avec une déviation d'angle strictement supérieur à 2,5° par rapport au rayonnement incident.

Chacune des zones de l'élément en couches parmi la zone écran, la zone de transition, et la zone périphérique, a des propriétés de transmission spéculaire. De préférence, chacune des zones de l'élément en couches a un flou en transmission (Haze T) inférieur ou égal à 10%, préférentiellement inférieur ou égal à 5%, encore plus préférentiellement inférieur ou égal à 3%. De préférence, chacune des zones de l'élément en couches a une clarté supérieure ou égale à 80%, préférentiellement supérieure ou égale à 95%, encore plus préférentiellement supérieure ou égale à 98%.

L'invention peut être mise en œuvre en optant pour une décroissance de l'évolution de la réflexion lumineuse diffuse dans la zone de transition depuis la zone écran vers la zone périphérique, qui peut notamment être une décroissance selon un gradient continu, ou une décroissance selon un gradient échelonné comprenant au moins un palier. En variante, l'invention peut être mise en œuvre en optant pour une réduction de la densité de parties à réflexion diffuse dans la zone de transition dans le sens allant de la zone écran vers la zone périphérique, ce qui se traduit par la présence de maximums locaux dans l'évolution de la réflexion lumineuse diffuse tels que la courbe passant par la valeur de réflexion lumineuse diffuse à la jonction de la zone de transition avec la zone écran et par ces maximums locaux est décroissante.

De manière avantageuse, dans le cas où l'évolution de la réflexion lumineuse diffuse dans la zone de transition présente au moins un minimum local, l'évolution de la réflexion lumineuse diffuse dans la zone de transition depuis la zone écran vers la zone périphérique, dans toute direction reliant la zone écran à la zone périphérique, est telle que la courbe passant par le ou chaque minimum local de l'évolution de la réflexion lumineuse diffuse dans la zone de transition et par la valeur de réflexion lumineuse diffuse à la jonction de la zone de transition avec la zone périphérique est décroissante.

La couche centrale de la zone de transition peut être continue ou discontinue. Au sens de l'invention, une couche comporte deux surfaces principales parallèles entre elles. L'épaisseur d'une couche est mesurée entre ses deux surfaces principales, dans une direction normale auxdites surfaces principales.

Dans le cadre de l'invention, on distingue :

- d'une part, les couches métalliques pour lesquelles la valeur de l'indice de réfraction est indifférente, et
- d'autre part, les couches transparentes, notamment diélectriques, pour lesquelles la différence d'indice de réfraction par rapport à celui des couches externes est à considérer.

On entend par matériau ou couche diélectrique, un matériau ou une couche de conductivité électrique faible, inférieure à 100 S/m.

Chaque couche externe de l'élément en couches peut être formée par un empilement de couches, pour autant que les différentes couches constitutives de la couche externe soient constituées en des matériaux transparents, notamment diélectriques, ayant tous sensiblement le même indice de réfraction.

Pour chaque zone parmi la zone écran et la zone de transition, la couche centrale est formée :

- soit par une couche unique qui est une couche transparente, notamment diélectrique, d'indice de réfraction différent de celui des couches externes ou une couche métallique,
- soit par un empilement de couches qui comprend au moins une couche transparente, notamment diélectrique, d'indice de réfraction différent de celui des couches externes ou une couche métallique.

Selon l'invention, pour obtenir les propriétés de réflexion diffuse et transmission spéculaire dans chaque zone parmi la zone écran et la zone de transition de l'élément en couches, toutes les surfaces de contact entre deux couches adjacentes de l'élément en couches dont l'une est une couche transparente, notamment diélectrique, et l'autre est une couche métallique, ou qui sont deux couches transparentes, notamment diélectriques, d'indices de réfraction différents, sont texturées et parallèles entre elles.

La réflexion diffuse de chaque côté de l'élément en couches au niveau de la zone écran et de la zone de transition provient de ce que chaque surface de contact entre deux couches adjacentes de l'élément en couches dont l'une est une couche transparente, notamment diélectrique, et l'autre est une couche métallique, ou qui sont deux couches transparentes, notamment diélectriques, d'indices de réfraction différents, est texturée. Ainsi, lorsqu'un rayonnement incident sur la zone écran ou la zone de transition de l'un ou l'autre côté de l'élément en couches atteint une telle surface de contact, il est réfléchi par la couche métallique ou du fait de la différence d'indice de réfraction entre les deux couches transparentes et, comme la surface de contact est texturée, la réflexion est diffuse.

La transmission spéculaire à travers l'élément en couches provient quant à elle de ce que les deux couches externes ont des surfaces principales externes lisses et sont constituées en des matériaux ayant sensiblement le même indice de réfraction, et de ce que toutes les surfaces de contact entre deux couches adjacentes de l'élément en couches dont l'une est une couche transparente, notamment diélectrique, et l'autre est une couche métallique, ou qui sont deux couches transparentes, notamment diélectriques, d'indices de réfraction différents, sont texturées et parallèles entre elles.

Au sens de l'invention, deux matériaux transparents, notamment diélectriques, ont sensiblement le même indice de réfraction, ou ont leurs indices de réfraction sensiblement égaux, lorsque la valeur absolue de la différence entre leurs indices de réfraction à 550 nm est inférieure ou égale à 0,15. De préférence, la valeur absolue de la différence d'indice de réfraction à 550 nm entre les matériaux constitutifs des deux couches externes de l'élément en couches est inférieure à 0,05, encore de préférence inférieure à 0,015. Au sens de l'invention, deux couches transparentes, notamment diélectriques, ont des indices de réfraction différents lorsque la valeur absolue de la différence entre leurs indices de réfraction à 550 nm est strictement supérieure à 0,15.

Dans la suite de cette description, on fait référence au profil de rugosité ou aux pentes (de la surface) de la couche centrale de la zone écran ou de la couche centrale de la zone de transition, étant entendu qu'il s'agit d'un abus de langage pour désigner le profil de rugosité ou les pentes de chaque surface de contact texturée de l'élément en couches qui est située entre deux couches adjacentes dont l'une est une couche transparente, notamment diélectrique, et l'autre est une couche métallique, ou entre deux couches adjacentes qui sont deux couches transparentes, notamment diélectriques, d'indices de réfraction différents. Dans la mesure où toutes ces surfaces texturées sont parallèles entre elles dans chaque zone parmi la zone écran et la zone de transition de l'élément en couches, il existe bien un unique profil de rugosité et une unique distribution de pentes pour chaque zone écran ou zone de transition, que l'on désigne sous le nom de "profil de rugosité (de la surface) de la couche centrale de la zone" ou "pentes (de la surface) de la couche centrale de la zone".

Dans le cadre de l'invention, la réflexion lumineuse totale du côté d'une couche externe de l'élément en couches, exprimée en %, est mesurée selon la norme ISO 9050:2003 (illuminant D65 ; 2° Observateur), en positionnant la source lumineuse de telle sorte que le rayonnement est en incidence normale sur l'élément du côté de ladite couche externe. De plus, à partir de la réflexion lumineuse totale du côté d'une couche externe de l'élément en couches, on définit la réflexion lumineuse diffuse du côté de cette couche externe, qui est la part de la réflexion lumineuse totale correspondant à la lumière réfléchie avec un angle strictement supérieur à 2,5° par rapport à la normale à la couche externe considérée.

Pour chaque point d'une zone de l'élément en couches parmi la zone écran et la zone de transition, on définit la réflexion lumineuse totale en ce point, respectivement la réflexion lumineuse diffuse en ce point, comme étant la moyenne de la réflexion lumineuse totale, respectivement diffuse, sur une surface de référence qui est centrée en ce point et de dimension adaptée pour être représentative du profil de rugosité de la couche centrale de la zone considérée. Dans le cadre de l'invention, la surface de référence utilisée pour définir la réflexion lumineuse totale, respectivement la réflexion lumineuse diffuse, en un point d'une zone parmi la zone écran et la zone de transition est une surface centrée en ce point dont la dimension est le maximum parmi 1mm x 1mm et 3Rsm x 3Rsm, où Rsm est la largeur moyenne des éléments du profil de rugosité de la couche centrale de la zone considérée, telle que définie dans la norme ISO 4287, mesurée à l'aide d'un profilomètre MICROMESURE 2 de la société STIL, sur une surface de 1mm x 1mm avec un pas d'échantillonnage de 1 micron x 1 micron.

En pratique, la réflexion lumineuse diffuse en un point d'une zone de l'élément en couches parmi la zone écran et la zone de transition, du côté de l'une des couches externes, est déterminée comme étant le produit du flou en réflexion en ce point du côté de la couche externe considérée par la réflexion lumineuse totale en ce point du côté de la couche externe considérée. Etant donnée la limite angulaire de 2,5° pour la réflexion lumineuse diffuse, le flou en réflexion en un point d'une zone de l'élément en couches parmi la zone écran et la zone de transition est la proportion des pentes de la couche centrale, prises sur la surface de référence centrée en ce point, qui sont telles que la valeur de la pente est strictement supérieure à $(1/2)arcsin(sin(2,5°)/n2) = (1/2)arcsin(sin(2,5°)/n4)$, où n2 et n4 sont les indices de réfraction sensiblement égaux des deux couches externes de la zone de l'élément en couches.

Dans le cadre de l'invention, la proportion des pentes, correspondant au flou en réflexion tel que défini ci-dessus, est déterminée en mesurant le profil $z = f(x,y)$ de la surface de la couche centrale texturée de ladite zone à l'aide d'un profilomètre MICROMESURE 2 de la société STIL, sur une surface de 1mm x 1mm avec un pas d'échantillonnage de 1 micron x 1 micron, et en calculant en chaque point de la surface mesurée la pente locale $\theta$, selon la relation :

$$\theta = arctan\left(\sqrt{\left(\frac{\partial z}{\partial x}\right)^2 + \left(\frac{\partial z}{\partial y}\right)^2}\right), \quad \text{où } \frac{\partial z}{\partial x} \text{ et } \frac{\partial z}{\partial y}$$

sont les dérivées partielles de l'altitude calculées avec le filtre de Sobel.

Dans ce qui suit, on considère comme paramètre de rugosité d'une surface, la pente quadratique moyenne Rdq de la surface telle que définie dans la norme ISO 4287, mesurée à l'aide d'un profilomètre MICROMESURE 2 de la société STIL, sur une surface de 1mm x 1mm avec un pas d'échantillonnage de 1 micron x 1 micron.

Dans toute cette demande, pour les mesures réalisées à l'aide du profilomètre MICROMESURE 2 de la société STIL, les conditions de mesure sont les suivantes. La tête de mesure est constituée d'une lentille chromatique associée à un "magnifier" ayant les caractéristiques : ouverture numérique de 0,42 ; angle de mesure maximum de 25° ; résolution en Z de 0,04 microns ; résolution latérale de 4,5 microns. L'extraction des paramètres de rugosité est réalisée avec un filtrage gaussien passe-bas ayant une longueur de coupure de 19 microns (qui filtre les microrugosités) et un filtrage gaussien passe-haut ayant une longueur de coupure de 1 mm (qui filtre les ondulations).

Dans le cadre de l'invention, on utilise les définitions suivantes :

- Un élément transparent est un élément à travers lequel il y a une transmission de rayonnement au moins dans les domaines de longueurs d'onde utiles pour l'application visée de l'élément. A titre d'exemple, lorsque l'élément est utilisé en tant que vitrage de bâtiment ou de véhicule, il est transparent au moins dans le domaine de longueurs d'onde du visible.

- Un vitrage transparent est un substrat transparent rigide, organique ou minéral.

- Une surface lisse est une surface pour laquelle les irrégularités de surface sont de dimensions inférieures à la longueur d'onde du rayonnement incident sur la surface, de sorte que le rayonnement n'est pas dévié par ces irrégularités de surface. Le rayonnement incident est alors transmis et réfléchi de manière spéculaire par la surface. Dans le cadre de l'invention, une surface lisse est une surface ayant une pente quadratique moyenne

Rdq telle que décrite précédemment inférieure ou égale à 0,2°.

- Une surface texturée est une surface pour laquelle les propriétés de surface varient à une échelle plus grande que la longueur d'onde du rayonnement incident sur la surface. Le rayonnement incident est alors transmis et réfléchi de manière diffuse par la surface. Dans le cadre de l'invention, une surface texturée est une surface ayant une pente quadratique moyenne Rdq telle que décrite précédemment strictement supérieure à 0,2°.

L'élément en couches transparent conforme à l'invention permet d'obtenir :

- une transmission spéculaire et une réflexion diffuse d'un rayonnement incident sur la zone écran de l'élément en couches du côté de l'une ou l'autre de ses couches externes,

- une transmission spéculaire et une réflexion spéculaire d'un rayonnement incident sur la zone périphérique de l'élément en couches du côté de l'une ou l'autre de ses couches externes, et

- un aspect visuel globalement uniforme de l'élément en couches, du côté de l'une ou l'autre de ses couches externes, grâce à la zone de transition permettant une intégration de la zone écran par rapport à la zone périphérique sans délimitation visuelle marquée entre les deux zones.

Un vitrage transparent comprenant un tel élément en couches transparent présente ainsi un aspect visuel globalement uniforme et permet à la fois de projeter des images dans au moins une zone du vitrage dédiée à la projection, qui correspond à la ou chaque zone écran de l'élément en couches, et d'assurer une vision nette à travers le vitrage dans au moins une zone du vitrage dédiée à la vision, qui correspond à la ou chaque zone périphérique de l'élément en couches.

La transparence en transmission et la réflexion diffuse de l'élément en couches transparent, et d'un vitrage transparent l'incorporant, concourent à l'obtention d'une bonne luminosité des images projetées sur la zone écran. La couche centrale de la zone écran favorise la réflexion diffuse, ce qui permet la projection directe d'une image sur l'un quelconque des côtés de l'élément en couches transparent, et d'un vitrage transparent l'incorporant, l'image se formant au niveau de la couche centrale.

De manière avantageuse, de chaque côté de l'élément en couches et dans toute direction reliant la zone écran à la zone périphérique, la variation de la réflexion lumineuse diffuse dans la zone de transition est inférieure ou égale à (20%)RL(ZE)/mm, où RL(ZE) est la réflexion lumineuse totale moyenne de la zone écran.

De préférence, la réflexion lumineuse totale RL(ZE) est constante dans la zone écran.

Dans un mode de réalisation, de chaque côté de l'élément en couches, l'évolution de la réflexion lumineuse diffuse dans la zone de transition est continûment décroissante depuis la zone écran vers la zone périphérique, dans toute direction reliant la zone écran à la zone périphérique.

Selon une variante, de chaque côté de l'élément en couches, l'évolution de la réflexion lumineuse diffuse dans la zone de transition est décroissante depuis la zone écran vers la zone périphérique, dans toute direction reliant la zone écran à la zone périphérique, au moyen d'au moins un palier pour lequel la réflexion lumineuse diffuse en tout point du palier est strictement inférieure à la réflexion lumineuse diffuse en tout point de la zone écran et d'un éventuel précédent palier plus proche de la zone écran. Bien entendu, il est possible d'avoir également au sein de chaque palier une décroissance continue de l'évolution de la réflexion lumineuse diffuse dans le sens allant de la zone écran vers la zone périphérique.

Selon une autre variante, dans toute direction reliant la zone écran à la zone périphérique, la zone de transition comporte au moins deux régions successives dans le sens allant de la zone écran vers la zone périphérique, où chaque région est formée par la combinaison de deux parties comprenant une première partie plus proche de la zone écran et une deuxième partie plus proche de la zone périphérique, la réflexion lumineuse diffuse moyenne de la première partie étant strictement inférieure à la réflexion lumineuse diffuse moyenne de la deuxième partie, les régions successives ayant une distribution de plus en plus en faveur de la première partie en allant vers la zone périphérique. L'invention est alors mise en œuvre par réduction de la densité des parties à réflexion diffuse dans le sens allant de la zone écran vers la zone périphérique, ce qui se traduit par la présence de maximums locaux dans l'évolution de la réflexion lumineuse diffuse tels que la courbe passant par la valeur de réflexion lumineuse diffuse à la jonction de la zone de transition avec la zone écran et par ces maximums locaux est décroissante.

Selon une caractéristique préférée, dans toute direction reliant la zone écran à la zone périphérique, la variation du flou en transmission de la zone de transition est inférieure ou égale à 0,7%/mm.

Selon une autre caractéristique préférée, dans toute direction reliant la zone écran à la zone périphérique, la variation de la clarté de la zone de transition est inférieure ou égale à 0,5%/mm.

Dans le cadre de l'invention :

- le flou en transmission (Haze T) d'une zone d'un élément en couches, exprimé en %, est mesuré avec un hazemeter selon la norme ASTM D 1003 pour un rayonnement incident sur ladite zone de l'élément en couches ;
- la clarté d'une zone d'un élément en couches, exprimée en %, est mesurée avec le hazemeter Haze-Gard de BYK.

Selon l'invention, la décroissance de l'évolution de la réflexion lumineuse diffuse dans la zone de transition, ou de la courbe passant par le ou chaque maximum local de l'évolution de la réflexion lumineuse diffuse dans la zone de transition, est obtenue par variation d'au moins un paramètre parmi la pente quadratique moyenne et la réflexion lumineuse totale de la couche centrale de la zone de transition, dans toute direction reliant la zone écran à la zone périphérique.

En particulier, dans un mode de réalisation de l'invention, un premier paramètre parmi la pente quadratique moyenne et la réflexion lumineuse totale de la couche centrale de la zone de transition est constant et égal au paramètre correspondant de la couche centrale de la zone écran, tandis que le second paramètre parmi la pente quadratique moyenne et la réflexion lumineuse totale de la couche centrale de la zone de transition est inférieur ou égal au paramètre correspondant de la couche centrale de la zone écran et a une évolution décroissante depuis la zone écran vers la zone périphérique, dans toute direction reliant la zone écran à la zone périphérique.

Dans une réalisation, dans toute direction reliant la zone écran à la zone périphérique, l'évolution du second paramètre parmi la pente quadratique moyenne et la réflexion lumineuse totale de la couche centrale de la zone de transition est continûment décroissante depuis la zone écran vers la zone périphérique.

Dans une autre réalisation, dans toute direction reliant la zone écran à la zone périphérique, l'évolution du second paramètre parmi la pente quadratique moyenne et la réflexion lumineuse totale de la couche centrale de la zone de transition est décroissante depuis la zone écran vers la zone périphérique au moyen d'au moins un palier pour lequel ledit second paramètre en tout point du palier est strictement inférieur au paramètre correspondant en tout point de la zone écran et d'un éventuel précédent palier plus proche de la zone écran. Bien entendu, il est possible d'avoir également une décroissance continue de l'évolution dudit second paramètre au sein de chaque palier dans le sens allant de la zone écran vers la zone périphérique.

De manière avantageuse, lorsque le paramètre qui varie est la pente quadratique moyenne de la couche centrale de la zone de transition, l'évolution de celle-ci a une variation inférieure ou égale à 3,5°/mm, de préférence inférieure ou égale à 3°/mm, encore de préférence inférieure ou égale à 2°/mm.

De manière avantageuse, lorsque le paramètre qui varie est la réflexion lumineuse totale de la couche centrale de la zone de transition, l'évolution de celle-ci a une variation inférieure ou égale à (20%)RL(ZE)/mm, où RL(ZE) est la réflexion lumineuse totale moyenne de la zone écran.

Selon un mode de réalisation, la couche centrale de la zone de transition a un indice de réfraction égal à l'indice de réfraction de la couche centrale de la zone écran, et la décroissance de l'évolution de la réflexion lumineuse totale de la couche centrale de la zone de transition depuis la zone écran vers la zone périphérique, dans toute direction reliant la zone écran à la zone périphérique, est obtenue par décroissance de l'épaisseur de la couche centrale depuis la zone écran vers la zone périphérique.

Selon un autre mode de réalisation, la couche centrale de la zone de transition a une épaisseur égale à l'épaisseur de la couche centrale de la zone écran, et la décroissance de l'évolution de la réflexion lumineuse totale de la couche centrale de la zone de transition depuis la zone écran vers la zone périphérique, dans toute direction reliant la zone écran à la zone périphérique, est obtenue par variation de l'indice de réfraction de la couche centrale depuis la zone écran vers la zone périphérique.

Le parallélisme des surfaces de contact texturées dans chaque zone écran et de transition de l'élément en couches implique que, pour chaque couche de la couche centrale de la zone considérée qui est encadrée par des couches de nature, métallique ou non métallique, différente de la sienne ou d'indices de réfraction différents du sien, l'épaisseur de la couche est uniforme perpendiculairement à ses surfaces de contact avec les couches adjacentes. Cette uniformité de l'épaisseur peut être globale sur toute l'étendue de la texture, ou locale sur des tronçons de la texture. En particulier, lorsque la texture présente des variations de pente, l'épaisseur entre deux surfaces de contact texturées consécutives peut changer, par tronçon, en fonction de la pente de la texture, les surfaces de contact texturées restant toutefois toujours parallèles entre elles. Ce cas se présente notamment pour une couche déposée par pulvérisation cathodique, en particulier par pulvérisation cathodique assistée par un champ magnétique (pulvérisation cathodique magnétron), où l'épaisseur de la couche est d'autant plus faible que la pente de la texture augmente. Ainsi, localement, sur chaque tronçon de texture ayant une pente donnée, l'épaisseur de la couche reste constante, mais l'épaisseur de la couche est différente entre un premier tronçon de texture ayant une première pente et un deuxième tronçon de texture ayant une deuxième pente différente de la première pente.

De manière avantageuse, afin d'obtenir le parallélisme des surfaces de contact texturées à l'intérieur de chaque zone écran et zone de transition de l'élément en couches, la ou chaque couche constitutive de la couche centrale de la zone considérée est une couche déposée par pulvérisation cathodique. En effet, la pulvérisation cathodique, en particulier la pulvérisation cathodique assistée par un champ magnétique (pulvérisation dite "cathodique magnétron"), garantit que les surfaces délimitant la couche sont parallèles entre elles, ce qui n'est pas le cas d'autres techniques de dépôt telles que l'évaporation ou le dépôt chimique en phase vapeur (CVD), ou encore le procédé sol-gel. Or, le parallélisme des surfaces de contact texturées à l'intérieur de chaque zone écran et zone de transition de l'élément en couches est essentiel pour obtenir une transmission spéculaire à travers l'élément.

La zone périphérique de l'élément en couches peut être dépourvue de couche centrale intercalée entre les couches externes. En variante, la zone périphérique de l'élément en couches peut comprendre une couche centrale intercalée entre les couches externes mais, à la différence des couches centrales de la zone écran et de la zone de transition, la couche centrale de la zone périphérique n'est pas texturée ce qui garantit une réflexion spéculaire d'un rayonnement incident sur la zone périphérique de l'élément en couches du côté de l'une ou l'autre de ses couches externes.

Selon un aspect de l'invention, dans chaque zone de l'élément en couches comprenant une couche centrale, la couche centrale comprend au moins une couche mince constituée en un matériau diélectrique à haut indice de réfraction, différent de l'indice de réfraction des couches externes, tel que $Si_3N_4$, $SnO_2$, $ZnO$, $AlN$, $NbO$, $NbN$, $TiO_2$, ou constituée en un matériau diélectrique à bas indice de réfraction, différent de l'indice de réfraction des couches externes, tel que $SiO_2$, $Al_2O_3$, $MgF_2$, $AlF_3$. La couche centrale peut également comprendre au moins une couche mince métallique, notamment une couche mince d'argent, d'or, de titane, de niobium, de silicium, d'aluminium, d'alliage nickel-chrome (NiCr), d'acier inoxydable, ou de leurs alliages. Au sens de l'invention, une couche mince est une couche d'épaisseur inférieure à 1 micromètre.

De manière avantageuse, dans chaque zone de l'élément en couches comprenant une couche centrale, la composition chimique de la couche centrale peut être ajustée pour conférer des propriétés supplémentaires à l'élément en couches, par exemple des propriétés thermiques, de type contrôle solaire et/ou basse émissivité. Ainsi, dans un mode de réalisation, la couche centrale est un empilement de couches minces comprenant une alternance de « n » couches fonctionnelles métalliques, notamment de couches fonctionnelles à base d'argent ou d'alliage métallique contenant de l'argent, et de « (n + 1) » revêtements antireflet, avec n ≥ 1, où chaque couche fonctionnelle métallique est disposée entre deux revêtements antireflet.

De manière connue, un tel empilement à couche fonctionnelle métallique présente des propriétés de réflexion dans le domaine du rayonnement solaire et/ou dans le domaine du rayonnement infrarouge de grande longueur d'onde. Dans un tel empilement, la ou les couches fonctionnelles métalliques déterminent essentiellement les performances thermiques, tandis que les revêtements antireflet qui les encadrent agissent sur l'aspect optique de manière interférentielle. En effet, si les couches fonctionnelles métalliques permettent d'obtenir des performances thermiques souhaitées même à une faible épaisseur géométrique, de l'ordre de 10 nm pour chaque couche fonctionnelle métallique, elles s'opposent toutefois fortement au passage de rayonnement dans le domaine de longueurs d'onde du visible. Dès lors, des revêtements antireflet de part et d'autre de chaque couche fonctionnelle métallique sont nécessaires pour assurer une bonne transmission lumineuse dans le domaine du visible. En pratique, c'est l'empilement global de la couche centrale, comprenant les couches minces métalliques et les revêtements antireflet, qui est optimisé optiquement. De manière avantageuse, l'optimisation optique peut être faite sur l'empilement global de l'élément en couches ou du vitrage, c'est-à-dire incluant les couches externes positionnées de part et d'autre de la couche centrale et les éventuelles couches additionnelles.

L'élément en couches obtenu combine alors des propriétés optiques, à savoir des propriétés de transmission spéculaire et de réflexion diffuse d'un rayonnement incident sur les zones écran et de transition de l'élément en couches, et des propriétés thermiques, à savoir des propriétés de contrôle solaire et/ou de basse émissivité. Un tel élément en couches peut être utilisé pour des vitrages de protection solaire et/ou d'isolation thermique, notamment de véhicules ou de bâtiments.

Selon un aspect de l'invention, dans chaque zone écran et zone de transition de l'élément en couches, la texture de chaque surface de contact entre deux couches adjacentes dont l'une est une couche transparente, notamment diélectrique, et l'autre est une couche métallique, ou qui sont deux couches transparentes, notamment diélectriques, d'indices de réfraction différents, est formée par une pluralité de motifs en creux ou en saillie par rapport à un plan général de la surface de contact. Dans le cadre de l'invention, dans chaque zone écran et zone de transition de l'élément en couches, la pente quadratique moyenne Rdq de la couche centrale est strictement supérieure à 0,2°. De préférence, dans la zone écran de l'élément en couches, la pente quadratique moyenne Rdq de la couche centrale est comprise entre 0,5° et 30°, de préférence entre 2° et 20°, encore de préférence entre 2° et 10°. De préférence, dans la zone de transition de l'élément en couches, la pente quadratique moyenne Rdq de la couche centrale est comprise entre 0,5° et 30°, de préférence entre 0,5° et 20°, encore de préférence entre 0,5° et 10°.

En pratique, lorsque la variation de la réflexion lumineuse diffuse entre les différentes zones de l'élément en couches est obtenue par variation du profil de rugosité de la couche centrale pour une épaisseur et une composition chimique données constantes de la couche centrale, le profil de rugosité de la couche centrale de chaque zone de l'élément en couches peut être obtenu en déposant la ou chaque couche de la couche centrale d'épaisseur et de composition constantes de manière conforme sur un substrat présentant une texturation adaptée, par exemple une texturation avec une pente quadratique moyenne Rdq inférieure ou égale à 0,2° pour former la zone périphérique, une texturation avec une pente quadratique moyenne Rdq de l'ordre de 2° à 10° pour former la zone écran, et une texturation avec une pente quadratique moyenne Rdq décroissante depuis la zone écran vers la zone périphérique pour former la zone de transition. Une telle texturation adaptée d'un substrat peut être obtenue par tout procédé connu de texturation, par exemple par embossage de la surface du substrat, par abrasion, par sablage, par traitement chimique ou par gravure, en utilisant par exemple des masques pour ajuster le profil de rugosité de chaque partie de la surface du substrat.

En variante, lorsque la variation de la réflexion lumineuse diffuse entre les différentes zones de l'élément en couches est obtenue par variation de l'épaisseur de la couche centrale pour une composition chimique et un profil de rugosité donnés constants de la couche centrale, le profil d'épaisseur de la couche centrale de chaque zone de l'élément en couches peut être obtenu en déposant la ou chaque couche de la couche centrale de composition constante de manière conforme sur un substrat présentant une rugosité constante, en modulant l'épaisseur de dépôt.

De manière analogue, lorsque la variation de la réflexion lumineuse diffuse entre les différentes zones de l'élément en couches est obtenue par variation de l'indice de réfraction de la couche centrale pour une épaisseur et un profil de rugosité donnés constants de la couche centrale, le profil de composition chimique de la couche centrale de chaque zone de l'élément en couches peut être obtenu en déposant la ou chaque couche de la couche centrale d'épaisseur constante de manière conforme sur un substrat présentant une rugosité constante, avec modulation de la composition de la couche au cours du dépôt.

Dans un mode de réalisation de l'invention, l'une des deux couches externes de l'élément en couches est une couche externe texturée comprenant un substrat rigide ou flexible, notamment en verre ou en matériau organique polymérique, dont une surface principale est texturée. La texturation de l'une des surfaces principales du substrat peut être obtenue par tout procédé connu de texturation, par exemple par embossage de la surface du substrat préalablement chauffée à une température à laquelle il est possible de la déformer, en particulier par laminage au moyen d'un rouleau ayant à sa surface une texturation complémentaire de la texturation à former sur le substrat ; par abrasion au moyen de particules ou de surfaces abrasives, en particulier par sablage ; par traitement chimique, notamment traitement à l'acide dans le cas d'un substrat en verre ; par moulage, notamment moulage par injection dans le cas d'un substrat en polymère thermoplastique ; par gravure. En variante, la texturation de la surface principale du substrat peut être obtenue par dépôt d'une fritte de verre ou d'une couche émaillée.

Des exemples de substrats texturés en verre utilisables en tant que couche externe texturée de l'élément en couches comprennent : les substrats en verre commercialisés par la société Saint-Gobain Glass dans la gamme SGG Satinovo, qui présentent sur l'une de leurs surfaces principales une texture obtenue par attaque acide ; les substrats en verre commercialisés par la société Berliner Glas dans la gamme BG-Nonflex, qui présentent sur l'une de leurs surfaces principales une texture obtenue par traitement chimique ; les substrats en verre commercialisés par la société AGC dans la gamme Matelux Light, qui présentent sur l'une de leurs surfaces principales une texture obtenue par attaque acide ; les substrats en verre à haut indice texturés par sablage tel que du verre flint par exemple commercialisés par la société Schott sous les références SF6 (n=1,81 à 550 nm), 7SF57 (n=1,85 à 550 nm), N-SF66 (n=1,92 à 550 nm), P-SF68 (n=2,00 à 550 nm).

Dans le cas d'une couche externe texturée formée par un substrat texturé en matériau organique polymérique, des exemples de matériaux appropriés comprennent, notamment, les polyesters tels que le polyéthylène téréphtalate (PET), le polybutylène téréphtalate (PBT), le polyéthylène naphtalate (PEN) ; les polyacrylates tels que le polyméthacrylate de méthyle (PMMA) ; les polycarbonates ; les polyuréthanes ; les polyamides ; les polyimides ; les polymères fluorés tels que l'éthylène tétrafluoroéthylène (ETFE), le polyfluorure de vinylidène (PVDF), le polychlorotrifluoréthylène (PCTFE), l'éthylène de chlorotrifluoréthylène (ECTFE), les copolymères éthylène-propylène fluorés (FEP) ; les résines photoréticulables et/ou photopolymérisables, telles que les résines thiolène, polyuréthane, uréthane-acrylate, polyester-acrylate ; les polythiouréthanes. Ces polymères présentent en général une gamme d'indice de réfraction à 550 nm allant de 1,30 à 1,70. Toutefois, il est intéressant de noter que certains de ces polymères, et notamment les polymères comprenant du soufre tels que les polythiouréthanes, peuvent présenter des indices de réfraction à 550 nm élevés pouvant aller jusqu'à 1,74.

Dans un autre mode de réalisation de l'invention, l'une des deux couches externes de l'élément en couches est une couche externe texturée formée par une couche conformable, dont une surface principale est texturée et qui est rapportée par son autre surface principale sur un substrat rigide ou flexible. Il peut s'agir notamment d'une couche thermoformable ou d'une couche en matériau photoréticulable et/ou photopolymérisable. Dans ce cas, un procédé bien approprié pour la texturation de l'une des surfaces principales de la couche conformable est, notamment, l'embossage. De préférence, le matériau photoréticulable et/ou photopolymérisable se présente sous forme liquide à température ambiante et donne, lorsqu'il a été irradié et photoréticulé et/ou photopolymérisé, un solide transparent dépourvu de bulles ou de toute autre irrégularité. Il peut s'agir en particulier d'une résine telle que celles habituellement utilisées comme adhésifs, colles ou revêtements de surface. Ces résines sont généralement à base de monomères/ comonomères/pré-polymères de type époxy, époxysilane, acrylate, méthacrylate, acide acrylique, acide méthacrylique. On peut citer par exemple les résines thiolène, polyuréthane, uréthane-acrylate, polyester-acrylate. Au lieu d'une résine, il peut s'agir d'un gel aqueux photoréticulable, tel qu'un gel de polyacrylamide.

Lorsque l'une des deux couches externes de l'élément en couches est une couche externe texturée ayant une surface principale texturée et son autre surface principale lisse, la couche centrale est avantageusement formée :

- soit par une couche unique en matériau métallique ou en matériau transparent, notamment diélectrique, d'indice de réfraction différent de celui de la couche externe texturée, déposée de manière conforme sur la surface principale texturée de la couche externe texturée,
- soit par un empilement de couches, qui comprend au moins une couche en matériau métallique ou en matériau transparent, notamment diélectrique, d'indice de réfraction différent de celui de la couche externe texturée, déposées successivement de manière conforme sur la surface principale texturée de la couche externe texturée.

Selon l'invention, on considère que le dépôt de la couche centrale, ou le dépôt successif des couches de la couche centrale, sur la surface principale texturée de la couche externe texturée est réalisé de manière conforme si, suite au dépôt, la surface de la ou chaque couche de la couche centrale est texturée et parallèle à la surface principale texturée de la couche externe texturée. Selon une caractéristique avantageuse, le dépôt de la couche centrale de manière conforme, ou des couches de la couche centrale successivement de manière conforme, sur la surface principale texturée de la couche externe texturée est réalisé par pulvérisation cathodique, notamment assistée par un champ magnétique (pulvérisation cathodique magnétron). D'autres techniques de dépôt conforme sont également envisageables, telles que des techniques d'évaporation, en particulier pour le dépôt de couches métalliques.

Selon un aspect de l'invention, l'autre couche externe de l'élément en couches, c'est-à-dire la couche externe située de l'autre côté de la couche centrale par rapport à la couche externe texturée, comprend une couche de matériau durcissable d'indice de réfraction sensiblement égal à celui de la couche externe texturée, déposée sur la surface principale texturée de la couche centrale opposée à la couche externe texturée en étant initialement dans un état visqueux, liquide ou pâteux adapté à des opérations de mise en forme.

La couche déposée initialement dans un état visqueux, liquide ou pâteux peut être, en particulier, une couche de planarisation de la surface de l'élément en couches. En variante, la couche déposée initialement dans un état visqueux, liquide ou pâteux peut être une couche assurant une solidarisation entre, d'une part, la couche externe texturée munie de la couche centrale et, d'autre part, un contre-substrat.

La couche déposée initialement dans un état visqueux, liquide ou pâteux peut être une couche de matériau photoréticulable et/ou photopolymérisable. De préférence, ce matériau photoréticulable et/ou photopolymérisable se présente sous forme liquide à température ambiante et donne, lorsqu'il a été irradié et photoréticulé et/ou photopolymérisé, un solide transparent dépourvu de bulles ou de toute autre irrégularité. Il peut s'agir en particulier d'une résine telle que celles habituellement utilisées comme adhésifs, colles ou revêtements de surface. Ces résines sont généralement à base de monomères/comonomères/pré-polymères de type époxy, époxysilane, acrylate, méthacrylate, acide acrylique, acide méthacrylique. On peut citer par exemple les résines thiolène, polyuréthane, uréthane-acrylate, polyester-acrylate. Au lieu d'une résine, il peut s'agir d'un gel aqueux photoréticulable, tel qu'un gel de polyacrylamide.

En variante, la couche déposée initialement dans un état visqueux, liquide ou pâteux peut être une couche déposée par un procédé sol-gel, notamment une couche sol-gel comprenant une matrice hybride organique/inorganique à base de silice. Une telle couche sol-gel est particulièrement avantageuse car elle offre la possibilité d'ajuster avec précision la valeur de son indice de réfraction, de sorte qu'il soit le plus proche possible de celui de la couche externe texturée. Selon l'invention, l'accord d'indice ou écart d'indice entre les deux couches externes de l'élément en couches correspond à la valeur absolue de la différence entre les indices de réfraction à 550 nm de leurs matériaux diélectriques constitutifs. Plus l'écart d'indice est faible, plus la vision à travers l'élément en couches est nette. En particulier, on obtient une excellente vision avec un accord d'indice inférieur ou égal à 0,050, de préférence inférieur ou égal à 0,030 et mieux inférieur ou égal à 0,015.

Selon un aspect de l'invention, au moins l'une des deux couches externes de l'élément en couches est un feuillet intercalaire à base de matériau polymère, notamment thermoformable ou sensible à la pression, c'est-à-dire le type de feuillet qu'on utilise comme intercalaire dans les vitrages feuilletés. Il peut s'agir, en particulier, d'au moins un feuillet à base de polybutyral de vinyle (PVB), d'éthylène-acétate de vinyle (EVA), de polyuréthane (PU), de polyéthylène téréphtalate (PET), de polychlorure de vinyle (PVC). Cette couche à base de matériau polymère peut jouer le rôle d'un intercalaire de feuilletage qui peut être feuilleté ou calandré à un substrat en tant que couche additionnelle, par exemple un verre clair ou extra-clair.

Selon un aspect de l'invention, l'élément en couches peut être un film flexible. Un tel film flexible est avantageusement muni, sur l'une de ses surfaces principales externes, d'une couche d'adhésif recouverte d'une bande de protection destinée à être retirée pour le collage du film. L'élément en couches sous forme de film flexible est alors apte à être rapporté par collage sur une surface existante, par exemple une surface d'un vitrage transparent, afin de conférer à cette surface des propriétés de réflexion diffuse au niveau de chaque zone écran et de transition, tout en maintenant des propriétés de transmission spéculaire à travers le vitrage. Le vitrage sur lequel est rapporté l'élément en couches sous forme de film flexible peut être un vitrage plan ou bombé.

L'invention a également pour objet un vitrage transparent comprenant un élément en couches tel que décrit précédemment.

Dans un mode de réalisation, le vitrage transparent comprend en outre au moins une couche additionnelle positionnée contre l'élément en couches, de préférence choisie parmi :

- les substrats transparents choisis parmi les polymères, les verres ou les céramiques comprenant deux surfaces principales lisses,
- les matériaux durcissables initialement dans un état visqueux, liquide ou pâteux adapté à des opérations de mise en forme, notamment une couche sol-gel,
- les feuillets intercalaires à base de matériau polymère, notamment thermoformables ou sensibles à la pression.

De manière avantageuse, un tel vitrage transparent incorporant l'élément en couches comprend au moins un revêtement antireflet à l'interface entre l'air et le matériau constitutif de la couche formant une surface principale externe du vitrage qui est destinée à être à l'opposé d'un projecteur lors de la projection d'images sur la zone écran. L'ajout d'un revêtement antireflet permet de diminuer les réflexions multiples à l'intérieur de l'élément en couches et ainsi d'améliorer la qualité des images projetées.

Le revêtement antireflet prévu sur au moins l'une des surfaces principales externes du vitrage transparent peut être de tout type permettant de réduire la réflexion de rayonnement à l'interface entre l'air et la couche formant la surface principale externe. Il peut s'agir, notamment, d'une couche d'indice de réfraction compris entre l'indice de réfraction de l'air et l'indice de réfraction de la couche formant la surface principale externe, telle qu'une couche déposée sur la surface de la couche formant la surface principale externe par une technique sous vide ou une couche poreuse de type sol-gel, ou encore, dans le cas où la couche formant la surface principale externe est en verre, une partie superficielle creusée de cette couche en verre obtenue par un traitement à l'acide de type "etching". En variante, le revêtement antireflet peut être formé par un empilement de couches minces ayant des indices de réfraction alternativement plus faibles et plus forts jouant le rôle d'un filtre interférentiel à l'interface entre l'air et la couche formant la surface principale externe, ou par un empilement de couches minces présentant un gradient, continu ou échelonné, d'indices de réfraction entre l'indice de réfraction de l'air et celui de la couche formant la surface principale externe.

Les surfaces principales externes lisses de l'élément en couches et du vitrage transparent peuvent être planes ou bombées. En particulier, l'élément en couches peut être mis en œuvre dans un vitrage bombé, par exemple pour des bâtiments ou des véhicules, notamment automobiles. Selon un aspect de l'invention, les surfaces principales externes lisses de l'élément en couches peuvent être non parallèles entre elles, par exemple dans le cas d'un élément en couches en forme de coin destiné à être utilisé dans un système de visualisation dit tête haute, ou "Head Up Display" (HUD), afin d'éviter un phénomène de double image. Dans d'autres applications, les surfaces principales externes lisses de l'élément en couches sont de préférence parallèles entre elles, ce qui contribue à limiter la dispersion lumineuse pour un rayonnement traversant l'élément en couches, et donc à améliorer la netteté de la vision à travers l'élément en couches.

**BREVE DESCRIPTION DES FIGURES**

Les caractéristiques et avantages de l'invention apparaîtront dans la description qui va suivre de plusieurs modes de réalisation d'un élément en couches et d'un vitrage transparent selon l'invention, donnée uniquement à titre d'exemple et faite en se référant aux dessins annexés dans lesquels :

- la figure 1 est une vue de dessus schématique d'un vitrage transparent incorporant un élément en couches selon l'invention ;
- la figure 2 est une coupe transversale schématique du vitrage transparent de la figure 1 au niveau de la zone écran de l'élément en couches pour une première variante de la structure du vitrage ;
- la figure 3 est une coupe transversale schématique du vitrage transparent de la figure 1 au niveau de la zone écran de l'élément en couches pour une deuxième variante de la structure du vitrage ;
- la figure 4a est une coupe transversale schématique partielle d'un élément en couches conforme à un premier mode de réalisation de l'invention ;
- la figure 4b est une courbe montrant l'évolution de la réflexion lumineuse diffuse dans les différentes zones de l'élément en couches du premier mode de réalisation selon la coupe de la figure 4a ;
- la figure 5a est une coupe transversale schématique partielle d'un élément en couches conforme à un deuxième mode de réalisation de l'invention ;
- la figure 5b est une courbe montrant l'évolution de la réflexion lumineuse diffuse dans les différentes zones de l'élément en couches du deuxième mode de réalisation selon la coupe de la figure 5a ;
- la figure 6a est une vue de dessus schématique partielle d'un élément en couches conforme à un troisième mode de réalisation de l'invention ;
- la figure 6b est une vue de dessus schématique partielle d'un élément en couches conforme à un quatrième mode de réalisation de l'invention ;
- la figure 7a est une coupe transversale selon la ligne VII-VII de la figure 6a ou de la figure 6b ;
- la figure 7b est une courbe montrant l'évolution de la réflexion lumineuse diffuse dans les différentes zones de l'élément en couches du troisième ou quatrième mode de réalisation selon la coupe de la figure 7a ;
- la figure 8a est une coupe transversale schématique partielle d'un élément en couches conforme à un cinquième mode de réalisation de l'invention ;
- la figure 8b est une courbe montrant l'évolution de la réflexion lumineuse diffuse dans les différentes zones de l'élément en couches du cinquième mode de réalisation selon la coupe de la figure 8a ;
- la figure 9 est une coupe transversale schématique partielle d'un élément en couches conforme à un sixième mode de réalisation de l'invention ;
- la figure 10a est une vue à plus grande échelle d'un détail de la zone écran de l'élément en couches de l'une des figures 4 à 9, selon une première alternative ; et
- la figure 10b est une vue à plus grande échelle d'un détail de la zone écran de l'élément en couches de l'une des figures 4 à 9, selon une deuxième alternative.

**DESCRIPTION DETAILLEE**

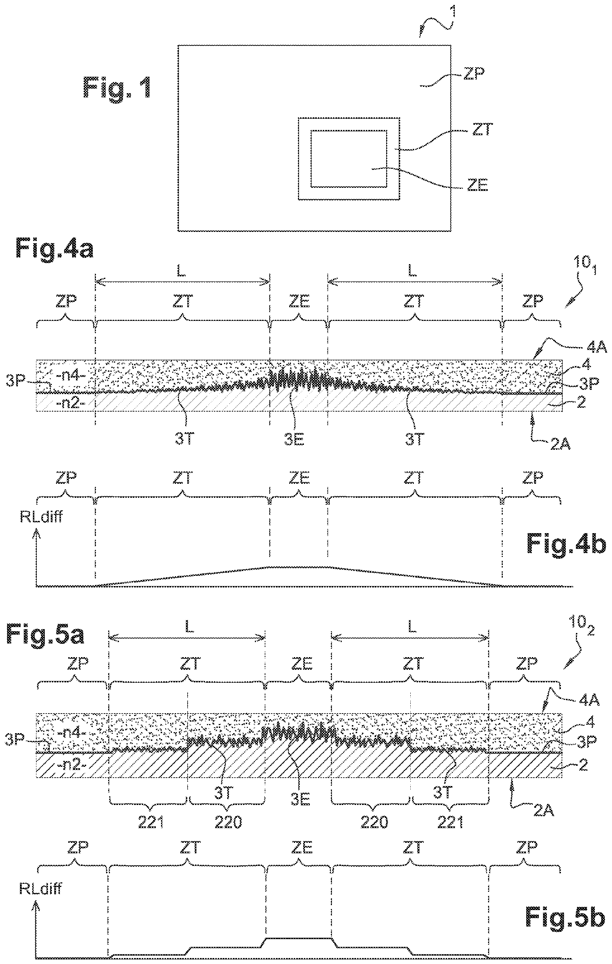

Sauf précision contraire, un même élément apparaissant sur des figures différentes présente une référence unique. Pour la clarté du dessin, les épaisseurs relatives des différentes couches et les largeurs relatives des différentes zones sur les figures 1 à 10b n'ont pas été rigoureusement respectées. De plus, la possible variation d'épaisseur de la ou chaque couche constitutive de la couche centrale en fonction de la pente de la texture n'a pas été représentée sur les figures, étant entendu que cette possible variation d'épaisseur n'impacte pas le parallélisme des surfaces de contact texturées. En effet, pour chaque pente donnée de la texture, les surfaces de contact texturées sont parallèles entre elles.

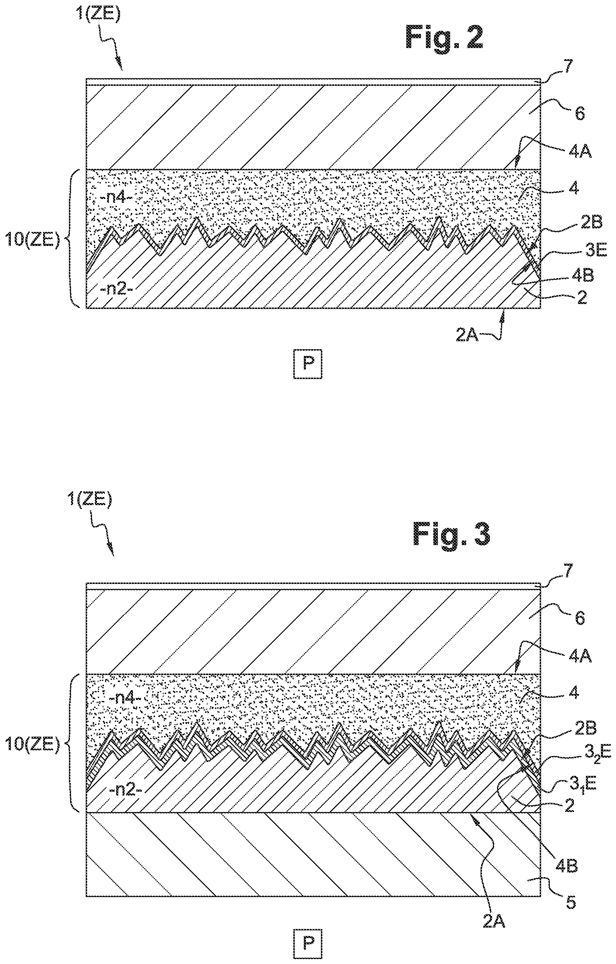

La figure 1 montre une vue de dessus schématique d'un vitrage transparent 1 incorporant un élément en couches selon l'invention, qui comporte une zone écran ZE, une zone périphérique ZP, et une zone de transition ZT entre la zone écran ZE et la zone périphérique ZP. Deux structures possibles pour le vitrage 1 sont montrées, à titre d'exemples non limitatifs, sur les figures 2 et 3. On note que les figures 2 et 3 illustrent la structure du vitrage 1 uniquement au niveau de la zone écran ZE, étant entendu que la structure du vitrage 1 est analogue au niveau de la zone de transition et de la zone périphérique, la couche centrale texturée 3E de la zone écran étant simplement remplacée, dans la zone de transition ZT, par la couche centrale texturée 3T de la zone de transition et, dans la zone périphérique ZP, soit par une absence de couche centrale soit par une couche centrale non texturée 3P de la zone périphérique.

Conformément à l'invention, comme illustré sur les figures 2 et 3, le vitrage 1 comprend un élément en couches 10 comportant deux couches externes 2 et 4, qui sont constituées en des matériaux diélectriques transparents ayant sensiblement le même indice de réfraction n2, n4. Chaque couche externe 2 ou 4 présente une surface principale lisse, respectivement 2A ou 4A, dirigée vers l'extérieur de l'élément en couches, et une surface principale texturée, respectivement 2B ou 4B, dirigée vers l'intérieur de l'élément en couches.

Les textures des surfaces internes 2B et 4B sont complémentaires l'une de l'autre. Les surfaces texturées 2B et 4B sont positionnées en regard l'une de l'autre, dans une configuration où leurs textures sont strictement parallèles entre elles. L'élément en couches 10 comprend également une couche centrale 3E, intercalée en contact entre les surfaces texturées 2B et 4B.

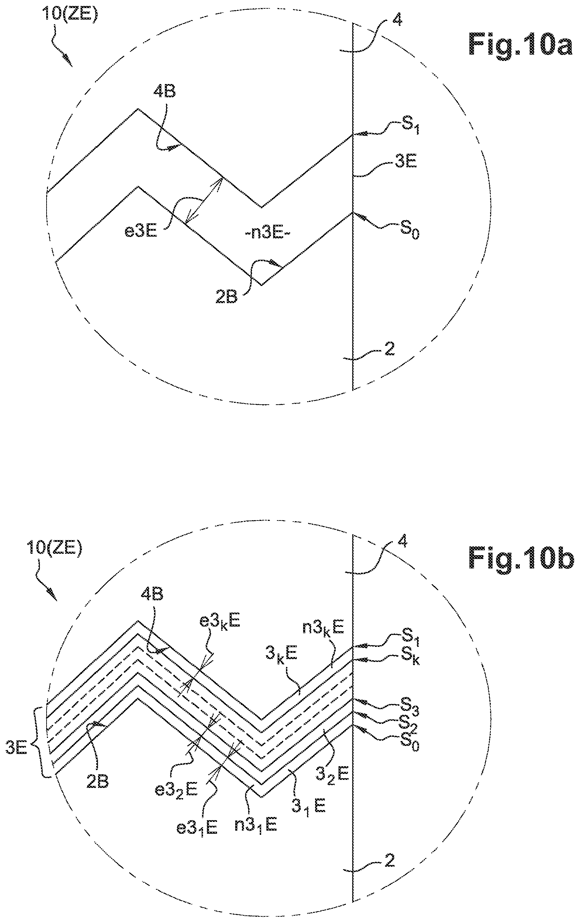

La figure 10a montre une variante de réalisation selon laquelle la couche centrale 3E est monocouche et constituée en un matériau transparent qui est soit métallique, soit diélectrique d'indice de réfraction n3 différent de celui des couches externes 2 et 4. La figure 10b montre une variante de réalisation selon laquelle la couche centrale 3E est formée par un empilement transparent de plusieurs couches $3_1E$, $3_2E$, ..., $3_kE$, où au moins l'une des couches $3_1E$ à $3_kE$ est soit une couche métallique, soit une couche diélectrique d'indice de réfraction différent de celui des couches externes 2 et 4. De préférence, au moins chacune des deux couches $3_1E$ et $3_kE$ situées aux extrémités de l'empilement est une couche métallique ou une couche diélectrique d'indice de réfraction n31E ou n3kE différents de celui des couches externes 2 et 4.

Les structures, monocouche ou multicouche, illustrées sur les figures 10a et 10b pour la couche centrale 3E de la zone écran ZE peuvent bien entendu être également mises en œuvre pour la couche centrale 3T de la zone de transition ZT et la couche centrale 3P de la zone périphérique ZP. Dans ce qui suit, toutes les références suivies de la lettre "E" sont transposables aux couches centrales de la zone de transition ZT et de la zone périphérique ZP en remplaçant la lettre "E" par la lettre "T" ou "P".

Sur les figures 10a et 10b, on note $S_0$ la surface de contact entre la couche externe 2 et la couche centrale 3E, et $S_1$ la surface de contact entre la couche centrale 3E et la couche externe 4. De plus, sur la figure 10b, on note successivement $S_2$ à $S_k$ les surfaces de contact internes de la couche centrale 3E, en partant de la surface de contact la plus proche de la surface $S_0$.

Dans la variante de la figure 10a, du fait de l'agencement de la couche centrale 3E en contact entre les surfaces texturées 2B et 4B qui sont parallèles entre elles, la surface de contact $S_0$ entre la couche externe 2 et la couche centrale 3E est texturée et parallèle à la surface de contact $S_1$ entre la couche centrale 3E et la couche externe 4. En d'autres termes, la couche centrale 3E est une couche texturée présentant une épaisseur e3E uniforme, prise perpendiculairement aux surfaces de contact $S_0$ et $S_1$.

Dans la variante de la figure 10b, chaque surface de contact $S_2,...,S_k$ entre deux couches adjacentes de l'empilement constitutif de la couche centrale 3E est texturée et strictement parallèle aux surfaces de contact $S_0$ et $S_1$ entre les couches externes 2, 4 et la couche centrale 3E. Ainsi, toutes les surfaces de contact $S_0,S_1,...,S_k$ entre des couches adjacentes de l'élément en couches 10 qui sont soit de natures différentes, diélectrique ou métallique, soit en matériaux diélectriques d'indices de réfraction différents, sont texturées et parallèles entre elles. En particulier, chaque couche $3_1E$, $3_2E,...,3_kE$ de l'empilement constitutif de la couche centrale 3 présente une épaisseur $e3_1E,e3_2E,...,e3_kE$ uniforme, prise perpendiculairement aux surfaces de contact $S_0,S_1,...,S_k$.

Selon un aspect de l'invention, l'épaisseur e3E ou $e3_1E,e3_2E,...,e3_kE$ de la ou chaque couche constitutive de la couche centrale 3E est inférieure à la hauteur moyenne des motifs de chaque surface de contact texturée $S_0,S_1$ ou $S_0,S_1,...,S_k$ de l'élément en couches 10. Cette condition est importante pour augmenter la probabilité que l'interface d'entrée d'un rayonnement dans une couche de la couche centrale 3E et l'interface de sortie du rayonnement hors de cette couche soient parallèles, et ainsi augmenter le pourcentage de transmission spéculaire du rayonnement à travers l'élément en couches 10. Dans un souci de visibilité des différentes couches, cette condition n'a pas été strictement respectée sur les figures. En pratique, lorsque la couche centrale 3E est une couche mince ou un empilement de couches minces, l'épaisseur e3E ou $e3_1E,e3_2E,...,e3_kE$ de chaque couche de la couche centrale 3E est de l'ordre de, ou inférieure à, 1/10 de la hauteur moyenne des motifs de chaque surface de contact texturée de l'élément en couches.

Dans le premier exemple de vitrage 1 montré sur la figure 2, la première couche externe 2 est un substrat texturé en verre clair ou extra-clair au moins partiellement texturé, par exemple un verre de type SGG Satinovo commercialisé par Saint-Gobain Glass, et la deuxième couche externe 4 est formée par un feuillet intercalaire, par exemple en PVB, qui a sensiblement le même indice de réfraction que le substrat 2 et qui se conforme à la texture de la surface texturée de la couche centrale 3E. Le feuillet intercalaire 4 est calandré par sa surface externe 4A à un substrat plan 6 en verre clair ou extra-clair, par exemple un verre de type SGG Planilux commercialisé par Saint-Gobain Glass. De plus, le vitrage 1 comprend un revêtement antireflet 7 sur la surface principale externe du substrat plan 6, qui est destinée à être à l'opposé par rapport à un projecteur P lors de la projection d'images sur la zone écran ZE. La présence du revêtement antireflet 7 permet de diminuer les réflexions multiples à l'intérieur de l'élément en couches 10 et ainsi d'améliorer la qualité des images projetées.

Dans le deuxième exemple de vitrage 1 montré sur la figure 3, la première couche externe 2 n'est pas un verre texturé, mais un feuillet intercalaire, par exemple en PVB, qui a sensiblement le même indice de réfraction que le feuillet intercalaire 4. Dans ce deuxième exemple, la couche centrale 3E comprend un film flexible $3_1E$, par exemple un film de poly(méthacrylate de méthyle) (PMMA) ayant une épaisseur de l'ordre de 50 à 250 $\mu$m, sur lequel a été déposée une couche mince $3_2E$ en matériau diélectrique ou en matériau métallique, par exemple une couche mince de $TiO_2$ ayant une épaisseur de l'ordre de 50 à 75 nm. L'ensemble du film flexible $3_1E$ et de la couche mince $3_2E$ est mis en forme d'ondulation ou d'accordéon pour créer la couche centrale texturée 3E, qui est ensuite prise en sandwich entre les feuillets intercalaires 2 et 4, de telle sorte que les surfaces de contact entre les couches 2, $3_1E$, $3_2E$ et 4 restent parallèles entre elles. Chacun des feuillets intercalaires 2, 4 est calandré par sa surface externe 2A, 4A à un substrat plan 5 ou 6 en verre clair ou extra-clair, par exemple un verre de type SGG Planilux commercialisé par Saint-Gobain Glass. De plus, comme dans l'exemple de la figure 2, le vitrage 1 comprend un revêtement antireflet 7 sur la surface principale externe du substrat plan 6, qui est destinée à être à l'opposé par rapport à un projecteur P lors de la projection d'images sur la zone écran ZE.

Les figures 4 à 9 illustrent plusieurs modes de réalisation de l'élément en couches 10 conforme à l'invention susceptible d'être intégré dans un vitrage 1. Dans chaque mode de réalisation, l'élément en couches 10 est conçu pour présenter un aspect visuel globalement uniforme du côté de l'une ou l'autre de ses couches externes 2, 4, grâce à la zone de transition ZT qui permet une intégration de la zone écran ZE au sein de la zone périphérique ZP sans délimitation visuelle marquée entre les zones. A cet effet, de chaque côté de l'élément en couches 10, la réflexion lumineuse diffuse $RL_{diff}(ZT)$ en tout point de la zone de transition ZT est inférieure ou égale à la réflexion lumineuse diffuse $RL_{diff}(ZE)$ en tout point de la zone écran ZE et l'évolution de la réflexion lumineuse diffuse $RL_{diff}(ZT)$ dans la zone de transition ZT depuis la zone écran ZE vers la zone périphérique ZP, dans toute direction reliant la zone écran ZE à la zone périphérique ZP, est décroissante, ou telle que la courbe passant par la valeur de réflexion lumineuse diffuse à la jonction de la zone de transition ZT avec la zone écran ZE et par le ou chaque maximum local de l'évolution $RL_{diff}(ZT)$ est décroissante.

De préférence, dans chaque mode de réalisation, afin d'obtenir un aspect visuel uniforme quelles que soient les conditions lumineuses, l'élément en couches 10 est conçu de sorte que, de chaque côté de l'élément en couches :

- dans toute direction reliant la zone écran ZE à la zone périphérique ZP, la variation de la réflexion lumineuse diffuse $RL_{diff}(ZT)$ dans la zone de transition ZT est inférieure ou égale à (20%)RL(ZE)/mm, où RL(ZE) est la réflexion lumineuse totale moyenne de la zone écran ZE ;
- dans toute direction reliant la zone écran ZE à la zone périphérique ZP, la variation du flou en transmission Haze T(ZT) de la zone de transition ZT est inférieure ou égale à 0,7%/mm ;
- dans toute direction reliant la zone écran ZE à la zone périphérique ZP, la variation de la clarté C(ZT) de la zone de transition ZT est inférieure ou égale à 0,5%/mm.

Dans le premier mode de réalisation d'un élément en couches $10_1$ représenté sur les figures 4a et 4b, la décroissance de l'évolution de la réflexion lumineuse diffuse dans la zone de transition ZT en allant de la zone écran ZE vers la zone périphérique ZP est obtenue par une variation continue du profil de rugosité de la couche centrale 3T de la zone de transition ZT, dans le sens d'une décroissance de la pente quadratique moyenne Rdq(ZT) depuis la zone écran ZE jusqu'à la zone périphérique ZP, tandis que les couches centrales 3E, 3T, 3P présentent toutes une même épaisseur et une même composition chimique.

A titre d'exemple, en référence à la figure 4a :

- Dans la zone écran ZE, la couche centrale 3E est texturée, avec une pente quadratique moyenne Rdq(ZE) de l'ordre de 5°.
- Dans la zone périphérique ZP, la couche centrale 3P est lisse, avec une pente quadratique moyenne Rdq(ZP) inférieure à 0,2°.
- Dans la zone de transition ZT, qui a une largeur L de 2,5 mm, la couche centrale 3T est texturée avec une pente quadratique moyenne Rdq(ZT) qui décroît continûment, depuis la valeur de la pente quadratique moyenne Rdq(ZE) de 5° à la jonction avec la zone écran ZE, jusqu'à une valeur inférieure à 0,2° à la jonction avec la zone périphérique ZP.

Dans le deuxième mode de réalisation d'un élément en couches $10_2$ représenté sur les figures 5a et 5b, la décroissance de l'évolution de la réflexion lumineuse diffuse dans la zone de transition ZT en allant de la zone écran ZE vers la zone périphérique ZP est obtenue par une variation par paliers du profil de rugosité de la couche centrale 3T de la zone de transition ZT, dans le sens d'une décroissance de la pente quadratique moyenne Rdq(ZT) depuis la zone écran ZE jusqu'à la zone périphérique ZP, tandis que les couches centrales 3E, 3T, 3P présentent toutes une même épaisseur et une même composition chimique.

A titre d'exemple, en référence à la figure 5a :

- Dans la zone écran ZE, la couche centrale 3E est texturée, avec une pente quadratique moyenne Rdq(ZE) de l'ordre de 5°.
- Dans la zone périphérique ZP, la couche centrale 3P est lisse, avec une pente quadratique moyenne Rdq(ZP) inférieure à 0,2°.
- Dans la zone de transition ZT, qui a une largeur L de 5 mm, la couche centrale 3T est texturée avec une pente quadratique moyenne Rdq(ZT) qui décroît selon deux paliers successifs 220, 221 tels que : pour le palier 220 le plus proche de la zone écran ZE, la couche centrale 3T est texturée avec une pente quadratique moyenne Rdq(ZT) de l'ordre de 3° ; pour le palier 221 le plus proche de la zone périphérique ZP, la couche centrale 3T est texturée avec une pente quadratique moyenne Rdq(ZT) de l'ordre de 1°.

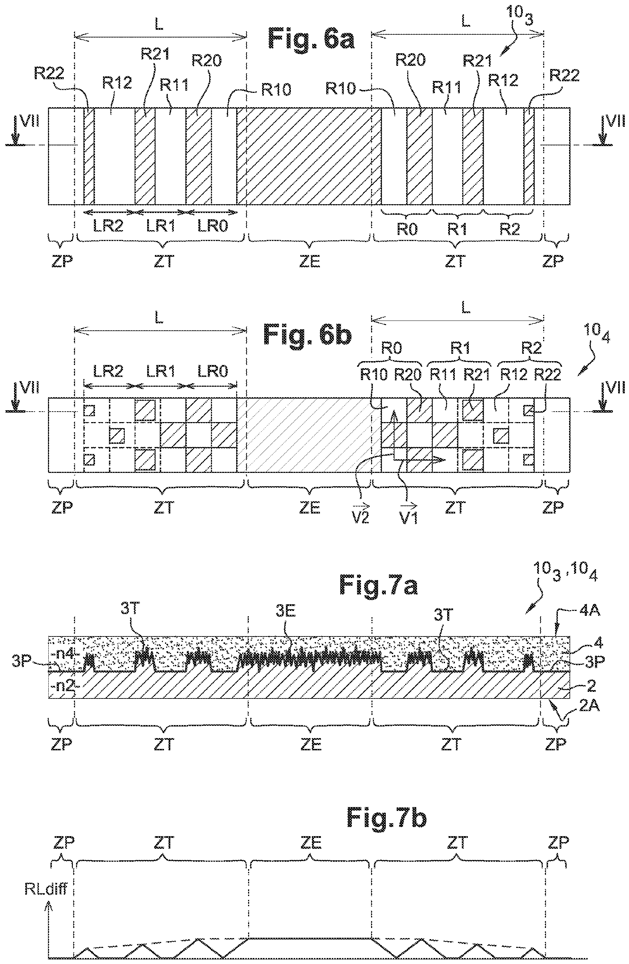

Dans les troisième et quatrième modes de réalisation représentés sur les figures 6a et 6b, l'invention est mise en œuvre par une réduction de la densité de régions ou parties texturées à réflexion diffuse depuis la zone écran ZE jusqu'à la zone périphérique ZP, tandis que les couches centrales 3E, 3T, 3P présentent toutes une même épaisseur et une même composition chimique.

Pour l'élément en couches $10_3$ conforme au troisième mode de réalisation représenté sur la figure 6a, qui correspond à une réduction de la densité de parties à réflexion diffuse par alternance de bandes lisses et de bandes texturées :

- Dans la zone écran ZE, la couche centrale 3E est texturée, avec une pente quadratique moyenne Rdq(ZE) de l'ordre de 5°.
- Dans la zone périphérique ZP, la couche centrale 3P est lisse, avec une pente quadratique moyenne Rdq(ZP) inférieure à 0,2°.
- Dans la zone de transition ZT, qui a une largeur L de 6 mm, le profil de rugosité de la couche centrale 3T est discontinu selon la direction reliant la zone écran ZE à la zone périphérique ZP.

Plus précisément, la zone de transition ZT comporte trois régions successives R0, R1, R2 en allant de la zone écran ZE vers la zone périphérique ZP, où chaque région est formée par la combinaison de deux bandes comprenant à chaque fois une bande lisse R10, R11, R12 plus proche de la zone écran ZE, où la couche centrale 3T a le même profil de rugosité que la zone périphérique ZP, c'est-à-dire une pente quadratique moyenne Rdq inférieure à 0,2°, et une bande texturée R20, R21, R22, plus proche de la zone périphérique ZP, où la couche centrale 3T a le même profil de rugosité que la zone écran ZE, c'est-à-dire une pente quadratique moyenne Rdq de l'ordre de 5°, la largeur LR0, LR1, LR2 des régions successives R0, R1, R2 étant constante avec une distribution de plus en plus en faveur de la bande lisse en allant vers la zone périphérique ZP. En d'autres termes, dans le sens allant de la zone écran ZE vers la zone périphérique ZP, les bandes lisses (blanches sur la figure 6a) sont de plus en plus larges alors que les bandes texturées (hachurées sur la figure 6a) sont de plus en plus étroites.

Pour l'élément en couches $10_4$ conforme au quatrième mode de réalisation représenté sur la figure 6b, qui correspond à une réduction de la densité de parties à réflexion diffuse par pavage avec alternance de pavés lisses et de pavés texturés :

- Dans la zone écran ZE, la couche centrale 3E est texturée, avec une pente quadratique moyenne Rdq(ZE) de l'ordre de 5°.
- Dans la zone périphérique ZP, la couche centrale 3P est lisse, avec une pente quadratique moyenne Rdq(ZP) inférieure à 0,2°.
- Dans la zone de transition ZT, qui a une largeur L de l'ordre de 6 mm, le profil de rugosité de la couche centrale 3T est discontinu à la fois selon une première direction qui est la direction reliant la zone écran ZE à la zone périphérique ZP et selon une deuxième direction orthogonale à la première direction tout en étant parallèle au plan moyen de l'élément $10_4$.

Plus précisément, la zone de transition ZT comporte un pavage régulier de polygones, qui sont des carrés dans l'exemple représenté sur la figure 6b, le pavage étant décrit par un premier vecteur de translation $\overrightarrow{V1}$ suivant la première direction et un deuxième vecteur de translation $\overrightarrow{V2}$ suivant la deuxième direction. Comme dans le troisième mode de réalisation, on peut définir trois régions successives R0, R1, R2 en allant de la zone écran ZE vers la zone périphérique ZP, où chaque région comprend une alternance de carrés lisses R10, R11, R12, où la couche centrale 3T a le même profil de rugosité que la zone périphérique ZP, c'est-à-dire une pente quadratique moyenne Rdq inférieure à 0,2°, et de carrés texturés R20, R21, R22, où la couche centrale 3T a le même profil de rugosité que la zone écran ZE, c'est-à-dire une pente quadratique moyenne Rdq de l'ordre de 5°, la largeur LR0, LR1, LR2 des régions successives R0, R1, R2 étant constante avec une distribution de plus en plus en faveur des carrés lisses en allant vers la zone périphérique ZP.

La réduction de la densité de régions ou parties texturées à réflexion diffuse depuis la zone écran ZE jusqu'à la zone périphérique ZP dans les troisième et quatrième modes de réalisation est bien visible sur la coupe de la figure 7a, qui montre le profil de rugosité de la couche centrale 3E, 3T, 3P dans chaque zone ZE, ZT, ZP des éléments en couches $10_3$ et $10_4$. Comme montré sur la figure 7b, un tel profil de rugosité de la couche centrale 3E, 3T, 3P des éléments en couches $10_3$ et $10_4$ se traduit par la présence de maximums et minimums locaux dans l'évolution de la réflexion lumineuse diffuse $RL_{diff}(ZT)$ dans la zone de transition, qui sont tels que :

- la courbe (montrée en pointillés sur la figure 7b) passant par la valeur de réflexion lumineuse diffuse à la jonction de la zone de transition ZT avec la zone écran ZE et par les maximums locaux est décroissante, et
- les minimums locaux sont sensiblement nuls, ce qui correspond à des parties de la couche centrale 3T ayant une pente quadratique moyenne Rdq inférieure à 0,2°.

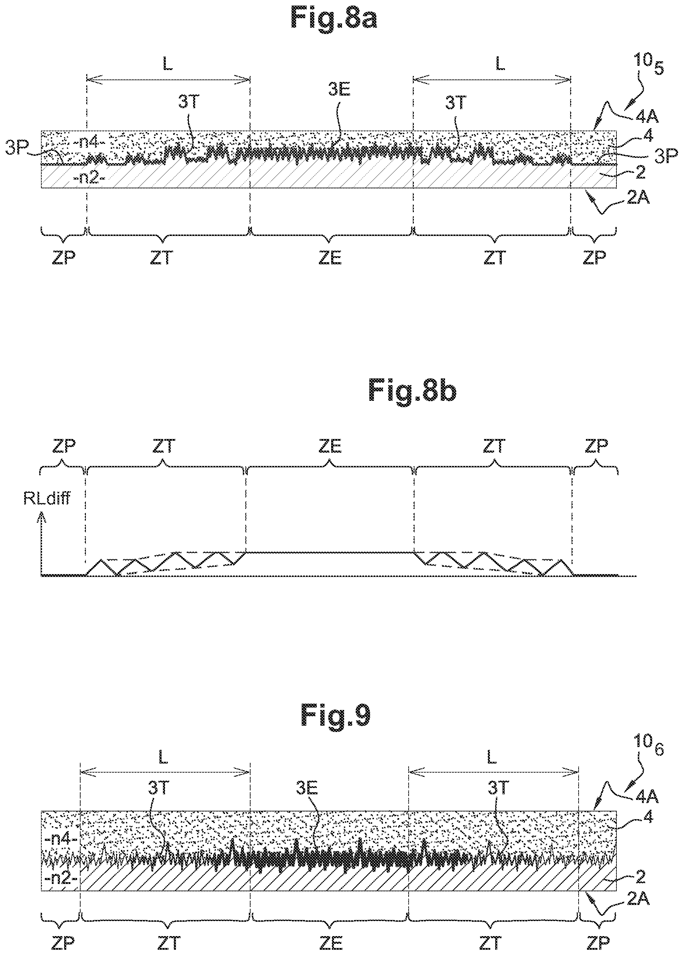

Dans le cinquième mode de réalisation représenté sur les figures 8a et 8b, l'invention est également mise en œuvre par une réduction de la densité de régions ou parties texturées à réflexion diffuse depuis la zone écran ZE jusqu'à la zone périphérique ZP, tandis que les couches centrales 3E, 3T, 3P présentent toutes une même épaisseur et une même composition chimique.

L'élément en couches $10_5$ du cinquième mode de réalisation diffère de ceux des troisième et quatrième modes de réalisation par le profil de rugosité de la couche centrale 3E, 3T, 3P dans chaque zone ZE, ZT, ZP, qui est visible sur la figure 8a. Comme montré sur la figure 8b, le profil de rugosité de la couche centrale 3E, 3T, 3P de l'élément en couches $10_5$ se traduit par la présence de maximums et minimums locaux dans l'évolution de la réflexion lumineuse diffuse $RL_{diff}(ZT)$ dans la zone de transition, qui sont tels que :

- la courbe (montrée en pointillés sur la figure 8b) passant par la valeur de réflexion lumineuse diffuse à la jonction de la zone de transition ZT avec la zone écran ZE et par les maximums locaux est décroissante, et
- la courbe (montrée en pointillés sur la figure 8b) passant par les minimums locaux et par la valeur de réflexion lumineuse diffuse à la jonction de la zone de transition ZT avec la zone périphérique ZP est décroissante.

En pratique, dans les modes de réalisation décrits précédemment, le profil de rugosité de la couche centrale de chaque zone ZE, ZT, ZP de l'élément en couches $10_1$, $10_2$, $10_3$, $10_4$, $10_5$ peut être obtenu en déposant la ou chaque couche de la couche centrale d'épaisseur et de composition constantes de manière conforme sur un substrat présentant une texturation adaptée, qui peut être obtenue par tout procédé connu de texturation, par exemple par embossage de la surface du substrat, par abrasion, par sablage, par traitement chimique ou par gravure, en utilisant par exemple des masques pour ajuster le profil de rugosité de chaque partie de la surface du substrat.

Dans le sixième mode de réalisation d'un élément en couches $10_6$ représenté sur la figure 9, la décroissance de l'évolution de la réflexion lumineuse diffuse dans la zone de transition ZT en allant de la zone écran ZE vers la zone périphérique ZP est obtenue par une décroissance continue de l'épaisseur de la couche centrale 3T de la zone de transition ZT, depuis la zone écran ZE jusqu'à la zone périphérique ZP, tandis que les couches centrales 3E, 3T présentent un même profil de rugosité et une même composition chimique et qu'il y a une absence de couche centrale (ou une couche centrale 3P d'épaisseur nulle) dans la zone périphérique ZP.

A titre d'exemple, en référence à la figure 9 :

- Dans la zone écran ZE, la couche centrale texturée 3E est une couche de $TiO_2$ ayant une épaisseur e(ZE) de l'ordre de 60 nm.
- Dans la zone périphérique ZP, il n'y a pas de couche centrale 3P et les couches externes 2 et 4 sont directement en contact l'une de l'autre.
- Dans la zone de transition ZT, qui a une largeur L de 5 mm, la couche centrale texturée 3T est une couche de $TiO_2$ ayant une épaisseur e(ZT) qui décroît continûment, depuis la valeur de l'épaisseur e(ZE) de 60 nm à la jonction avec la zone écran ZE, jusqu'à une valeur nulle à la jonction avec la zone périphérique ZP.

En pratique, le profil d'épaisseur de la couche centrale de chaque zone ZE, ZT, ZP de l'élément en couches $10_6$ peut être obtenu en déposant la ou chaque couche de la couche centrale de composition constante de manière conforme sur un substrat présentant une rugosité constante, en modulant l'épaisseur de dépôt. A titre d'exemple, la couche centrale 3T peut être déposée par pulvérisation cathodique magnétron, la modulation de l'épaisseur du dépôt étant réalisée en introduisant des masques dans l'enceinte magnétron. De manière avantageuse, ce mode de réalisation permet d'utiliser comme substrat pour le dépôt des substrats texturés commerciaux tels que ceux listés précédemment.

L'invention n'est pas limitée aux exemples décrits et représentés.

En particulier, selon une variante non représentée sur les figures, il est possible d'obtenir la variation de l'évolution de la réflexion lumineuse diffuse entre les différentes zones de l'élément en couches par variation de l'indice de réfraction de la couche centrale, pour une épaisseur et un profil de rugosité donnés constants de la couche centrale. Le profil adapté de composition chimique de la couche centrale de chaque zone de l'élément en couches peut alors être obtenu en déposant la ou chaque couche de la couche centrale d'épaisseur constante de manière conforme sur un substrat présentant une rugosité constante, avec modulation de la composition de la couche au cours du dépôt. La couche centrale de la zone de transition peut par exemple être déposée par pulvérisation cathodique magnétron en utilisant deux cibles de compositions différentes, notamment une première cible permettant le dépôt d'un matériau diélectrique à haut indice de réfraction, tel que $TiO_2$, et une deuxième cible permettant le dépôt d'un matériau diélectrique à bas indice de réfraction, tel que $SiO_2$, et en réalisant un gradient de composition de la couche déposée de plus en plus en faveur du matériau à bas indice de réfraction en allant vers la zone périphérique, de manière à obtenir une décroissance de l'indice de réfraction de la couche centrale depuis la zone écran vers la zone périphérique. A titre d'exemple, les deux cibles utilisées peuvent être une première cible en titane et une deuxième cible de Si:Al à 92:8 % wt, sous un plasma $Ar/O_2$, avec une pression de dépôt de $2.10^{-3}$ mbar.

Selon une autre variante non représentée sur les figures, l'invention peut être mise en œuvre par une réduction de la densité de régions ou parties dans la zone de transition qui sont munies d'une couche centrale en allant de la zone écran vers la zone périphérique, pour un profil de rugosité donné constant. Dans ce cas, la couche centrale de la zone de transition est discontinue. A titre d'exemple, la zone de transition peut comporter des parties qui sont munies d'une couche centrale identique à celle de la zone écran et des parties dépourvues de couche centrale, la distribution étant de plus en plus en faveur des parties dépourvues de couches centrale en allant vers la zone périphérique.

Par ailleurs, un élément en couches selon l'invention peut être un film flexible. En particulier, des architectures analogues aux modes de réalisation montrés sur les figures peuvent être envisagées avec des substrats flexibles en matériau organique polymérique, à la place de substrats en verre. De plus, lorsque l'élément en couches est un film flexible, il est avantageusement muni, sur l'une de ses surfaces principales externes, d'une couche d'adhésif recouverte d'une bande de protection (liner) destinée à être retirée pour le collage du film. L'élément en couches sous forme de film flexible peut alors être rapporté par collage sur une surface existante, par exemple une surface d'un vitrage transparent, afin de conférer à cette surface des propriétés de réflexion diffuse au niveau de chaque zone écran et de transition, tout en maintenant des propriétés de transmission spéculaire à travers le vitrage.

L'élément en couches selon l'invention est susceptible d'être utilisé pour toutes applications connues de vitrages, telles que pour véhicules, bâtiments, mobilier urbain, ameublement intérieur, supports d'affichage, écrans de projection, etc., où l'on souhaite obtenir un vitrage transparent permettant de projeter des images, par projection ou rétroprojection, tout en assurant une vision nette à travers le vitrage avec un aspect visuel globalement uniforme.

**Revendications**

1. Elément en couches transparent ($10_1$, $10_2$, $10_3$, $10_4$, $10_5$, $10_6$) comprenant deux couches externes transparentes (2, 4) ayant sensiblement le même indice de réfraction (n2, n4) et ayant chacune une surface principale externe (2A, 4A) lisse, l'élément en couches comportant :

   - une zone écran (ZE) à propriétés de réflexion diffuse et transmission spéculaire comportant une couche centrale texturée (3E) intercalée entre les couches externes (2, 4), qui définit des surfaces de contact texturées, parallèles entre elles, ayant une pente quadratique moyenne Rdq strictement supérieure à 0,2°, la couche centrale (3E) de la zone écran comportant au moins une couche transparente d'indice de réfraction (n3E) différent de celui des couches externes ou une couche métallique, et
   - une zone périphérique (ZP) à propriétés de réflexion spéculaire et transmission spéculaire,

   **caractérisé en ce que** l'élément en couches comporte une zone de transition (ZT) à propriétés de réflexion diffuse et transmission spéculaire entre la zone écran (ZE) et la zone périphérique (ZP), la zone de transition comprenant une couche centrale texturée (3T) intercalée entre les couches externes (2, 4), qui définit des surfaces de contact texturées, parallèles entre elles, ayant une pente quadratique moyenne Rdq strictement supérieure à 0,2°, la couche centrale (3T) de la zone de transition comportant au moins une couche transparente d'indice de réfraction (n3T) différent de celui des couches externes ou une couche métallique, et **en ce que** la réflexion lumineuse diffuse ($RL_{diff}(ZT)$) en tout point de la zone de transition est inférieure ou égale à la réflexion lumineuse diffuse ($RL_{diff}(ZE)$) en tout point de la zone écran et l'évolution de la réflexion lumineuse diffuse ($RL_{diff}(ZT)$) dans la zone de transition depuis la zone écran vers la zone périphérique, dans toute direction reliant la zone écran à la zone périphérique, est décroissante ou telle que la courbe passant par la valeur de réflexion lumineuse diffuse à la jonction de la zone de transition avec la zone écran et par le ou chaque maximum local de l'évolution de la réflexion lumineuse diffuse ($RL_{diff}(ZT)$) dans la zone de transition est décroissante, la décroissance de l'évolution de la réflexion lumineuse diffuse ($RL_{diff}(ZT)$) dans la zone de transition, ou de la courbe passant par le ou chaque maximum local de l'évolution de la réflexion lumineuse diffuse ($RL_{diff}(ZT)$) dans la zone de transition, étant obtenue par variation d'au moins un paramètre parmi la pente quadratique moyenne ($Rdq(ZT)$) et la réflexion lumineuse totale ($RL(ZT)$) de la couche centrale (3T)

de la zone de transition (ZT), dans toute direction reliant la zone écran (ZE) à la zone périphérique (ZP).

2. Elément en couches selon la revendication 1, **caractérisé en ce que**, dans toute direction reliant la zone écran (ZE) à la zone périphérique (ZP), la variation de la réflexion lumineuse diffuse ($RL_{diff}$(ZT)) dans la zone de transition (ZT) est inférieure ou égale à (20%)RL(ZE)/mm, où RL(ZE) est la réflexion lumineuse totale moyenne de la zone écran.

3. Elément en couches selon l'une quelconque des revendications 1 ou 2, **caractérisé en ce que** l'évolution de la réflexion lumineuse diffuse ($RL_{diff}$(ZT)) dans la zone de transition (ZT) depuis la zone écran (ZE) vers la zone périphérique (ZP), dans toute direction reliant la zone écran à la zone périphérique, est telle que la courbe passant par la valeur de réflexion lumineuse diffuse à la jonction la de la zone de transition avec la zone écran et par le ou chaque minimum local de l'évolution de la réflexion lumineuse diffuse ($RL_{diff}$(ZT)) dans la zone de transition est décroissante.

4. Elément en couches selon l'une quelconque des revendications 1 ou 2, **caractérisé en ce que** l'évolution de la réflexion lumineuse diffuse ($RL_{diff}$(ZT)) dans la zone de transition (ZT) est décroissante continûment depuis la zone écran (ZE) vers la zone périphérique (ZP), dans toute direction reliant la zone écran à la zone périphérique.

5. Elément en couches selon l'une quelconque des revendications 1 ou 2, **caractérisé en ce que** l'évolution de la réflexion lumineuse diffuse ($RL_{diff}$(ZT)) dans la zone de transition (ZT) est décroissante depuis la zone écran (ZE) vers la zone périphérique (ZP), dans toute direction reliant la zone écran à la zone périphérique, au moyen d'au moins un palier pour lequel la réflexion lumineuse diffuse en tout point du palier est strictement inférieure à la réflexion lumineuse diffuse en tout point de la zone écran et d'un éventuel précédent palier plus proche de la zone écran.

6. Elément en couches selon l'une quelconque des revendications 1 ou 2, **caractérisé en ce que**, dans toute direction reliant la zone écran (ZE) à la zone périphérique (ZP), la zone de transition (ZT) comporte au moins deux régions successives (R0, R1, R2) en allant de la zone écran vers la zone périphérique, chaque région étant formée par la combinaison de deux parties comprenant une première partie (R10, R11, R12) plus proche de la zone écran et une deuxième partie (R20, R21, R22) plus proche de la zone périphérique, où la réflexion lumineuse diffuse moyenne de la première partie est strictement inférieure à la réflexion lumineuse diffuse moyenne de la deuxième partie, les régions successives (R0, R1, R2 ; R'0, R'1) ayant une distribution de plus en plus en faveur de la première partie en allant vers la zone périphérique.

7. Elément en couches selon l'une quelconque des revendications précédentes, **caractérisé en ce que**, dans toute direction reliant la zone écran (ZE) à la zone périphérique (ZP), la variation du flou en transmission (Haze T(ZT)) de la zone de transition (ZT) est inférieure ou égale à 0,7%/mm.

8. Elément en couches transparent selon l'une quelconque des revendications précédentes, **caractérisé en ce que**, dans toute direction reliant la zone écran (ZE) à la zone périphérique (ZP), la variation de la clarté (C(ZT)) de la zone de transition (ZT) est inférieure ou égale à 0,5%/mm.

9. Elément en couches selon l'une quelconque des revendications précédentes, **caractérisé en ce qu'**un premier paramètre parmi la pente quadratique moyenne (Rdq(ZT)) et la réflexion lumineuse totale (RL(ZT)) de la couche centrale (3T) de la zone de transition (ZT) est constant et égal au paramètre correspondant de la couche centrale (3E) de la zone écran (ZE), tandis que le second paramètre parmi la pente quadratique moyenne (Rdq(ZT)) et la réflexion lumineuse totale (RL(ZT)) de la couche centrale (3T) de la zone de transition (ZT) est inférieur ou égal au paramètre correspondant de la couche centrale (3E) de la zone écran (ZE) et a une évolution décroissante depuis la zone écran (ZE) vers la zone périphérique (ZP), dans toute direction reliant la zone écran à la zone périphérique.

10. Elément en couches selon l'une quelconque des revendications précédentes, **caractérisé en ce que**, dans toute direction reliant la zone écran (ZE) à la zone périphérique (ZP), l'évolution de la pente quadratique moyenne (Rdq(ZT)) de la couche centrale (3T) de la zone de transition (ZT) a une variation inférieure ou égale à 3,5°/mm, de préférence inférieure ou égale à 3°/mm, encore de préférence inférieure ou égale à 2°/mm.

11. Elément en couches selon l'une quelconque des revendications précédentes, **caractérisé en ce que**, dans toute direction reliant la zone écran (ZE) à la zone périphérique (ZP), l'évolution de la réflexion lumineuse totale (RL(ZT)) de la couche centrale (3T) de la zone de transition (ZT) a une variation inférieure ou égale à (20%)RL(ZE)/mm, où RL(ZE) est la réflexion lumineuse totale moyenne de la zone écran.

12. Elément en couches selon l'une quelconque des revendications 1 à 11, **caractérisé en ce que** la couche centrale (3T) de la zone de transition (ZT) a un indice de réfraction (n3T) égal à l'indice de réfraction (n3E) de la couche centrale (3E) de la zone écran (ZE), l'évolution de la réflexion lumineuse totale (RL(ZT)) de la couche centrale (3T) de la zone de transition (ZT) étant décroissante depuis la zone écran (ZE) vers la zone périphérique (ZP), dans toute direction reliant la zone écran à la zone périphérique, par décroissance de l'épaisseur (e3T) de la couche centrale (3T) depuis la zone écran vers la zone périphérique.

13. Elément en couches selon l'une quelconque des revendications 1 à 11, **caractérisé en ce que** la couche centrale (3T) de la zone de transition (ZT) a une épaisseur (e3T) égale à l'épaisseur (e3E) de la couche centrale (3E) de la zone écran (ZE), l'évolution de la réflexion lumineuse totale (RL(ZT)) de la couche centrale (3T) de la zone de transition (ZT) étant décroissante depuis la zone écran (ZE) vers la zone périphérique (ZP), dans toute direction reliant la zone écran à la zone périphérique, par variation de l'indice de réfraction (n3T) de la couche centrale (3T) depuis la zone écran vers la zone périphérique.

14. Elément en couches selon l'une quelconque des revendications précédentes, **caractérisé en ce que** l'élément en couches ($10_1$, $10_2$, $10_3$, $10_4$, $10_5$, $10_6$) est un film flexible.

15. Vitrage transparent (1) comprenant un élément en couches ($10_1$, $10_2$, $10_3$, $10_4$, $10_5$, $10_6$) selon l'une quelconque des revendications précédentes.

16. Vitrage transparent selon la revendication 15, **caractérisé en ce qu'**il comprend en outre au moins une couche additionnelle positionnée contre l'élément en couches, de préférence choisie parmi :

- les substrats transparents choisis parmi les polymères, les verres ou les céramiques comprenant deux surfaces principales lisses,
- les matériaux durcissables initialement dans un état visqueux, liquide ou pâteux adapté à des opérations de mise en forme, notamment une couche sol-gel,
- les feuillets intercalaires à base de matériau polymère, notamment thermoformables ou sensibles à la pression.

17. Vitrage transparent selon l'une quelconque des revendications 15 ou 16, **caractérisé en ce qu'**il comprend au moins un revêtement antireflet (7) à l'interface entre l'air et le matériau constitutif de la couche formant une surface principale externe du vitrage destinée à être à l'opposé par rapport à un projecteur lors de la projection d'images sur la zone écran (ZE).

**Patentansprüche**

1. Transparentes geschichtetes Element ($10_1$, $10_2$, $10_3$, $10_4$, $10_5$, $10_6$), umfassend zwei transparente externe Schichten (2, 4) mit im Wesentlichen dem gleichen Brechungsindex (n2, n4), und wobei jede eine glatte externe Hauptoberfläche (2A, 4A) aufweist, wobei das geschichtete Element Folgendes umfasst:

- einen Anzeigebereich (ZE) mit Eigenschaften diffuser Reflexion und spiegelnder Transmission, der eine zwischen den externen Schichten (2, 4) eingesetzte texturierte Mittelschicht (3E) umfasst, welche die untereinander parallelen texturierten Kontaktoberflächen mit einer mittleren quadratischen Steigung Rdq von streng größer als 0,2° definiert, wobei die Mittelschicht (3E) des Anzeigebereichs mindestens eine transparente Schicht mit Brechungsindex (n3E) umfasst, der sich von jenem der externen Schichten oder einer Metallschicht unterscheidet, und
- einen Umfangsbereich (ZP) mit Eigenschaften spiegelnder Reflexion und spiegelnder Transmission,

**dadurch gekennzeichnet, dass** das geschichtete Element einen Übergangsbereich (ZT) mit Eigenschaften diffuser Reflexion und spiegelnder Transmission zwischen dem Anzeigebereich(ZE) und dem Umfangsbereich (ZP) umfasst, wobei der Übergangsbereich eine zwischen den externen Schichten (2, 4) eingesetzte texturierte Mittelschicht (3T) umfasst, welche die untereinander parallelen texturierten Kontaktoberflächen mit einer mittleren quadratischen Steigung Rdq von streng größer als 0,2° definiert, wobei die Mittelschicht (3T) des Übergangsbereichs mindestens eine transparente Schicht mit Brechungsindex (n3T) umfasst, der sich von jenem der externen Schichten oder einer Metallschicht unterscheidet, und dadurch, dass die diffuse Lichtreflexion ($RL_{diff}(ZT)$) an jedem Punkt des Übergangsbereichs kleiner oder gleich der diffusen Lichtreflexion ($RL_{diff}(ZE)$) an jedem Punkt des Anzeigebereichs ist, und die Evolution der diffusen Lichtreflexion ($RL_{diff}(ZT)$) in dem Übergangsbereich, ab dem Anzeigebereich hin zum Umfangsbereich in jeder Richtung, die den Anzeigebereich mit dem Umfangsbereich verbindet, abnimmt, oder derart ist, dass die Kurve, die durch den Wert der diffusen Lichtreflexion an der Verbindungsstelle des Übergangsbereichs mit dem Anzeigebereich und durch das oder jedes lokale Maximum der Evolution der diffusen Lichtreflexion ($RL_{diff}(ZT)$) in dem Übergangsbereich hindurchgeht, abnimmt, wobei die Abnahme der Evolution der diffusen Lichtreflexion ($RL_{diff}(ZT)$) in dem Übergangsbereich oder der Kurve, die durch das oder jedes lokale Maximum der Evolution der diffusen Lichtreflexion ($RL_{diff}(ZT)$) in dem Übergangsbereich hindurchgeht, durch Variation von mindestens einem Parameter aus der mittleren quadratischen Steigung ($Rdq(ZT)$) und der Gesamtlichtreflexion ($RL(ZT)$) der Mittelschicht (3T) des Übergangsbereichs (ZT) in jeder Richtung, die den Anzeigebereich (ZE) mit dem Umfangsbereich (ZP) verbindet, erhalten wird.

2. Geschichtetes Element nach Anspruch 1, **dadurch gekennzeichnet, dass** in jeder Richtung, die den Anzeigebereich (ZE) mit dem Umfangsbereich (ZP) verbindet, die Variation der diffusen Lichtreflexion ($RL_{diff}(ZT)$) in dem Übergangsbereich (ZT) kleiner oder gleich (20 %)RL(ZE)/mm ist, wobei RL(ZE) die mittlere Gesamtlichtreflexion des Anzeigebereichs ist.

3. Geschichtetes Element nach einem der Ansprüche 1 oder 2, **dadurch gekennzeichnet, dass** die Evolution der diffusen Lichtreflexion ($RL_{diff}(ZT)$) in dem Übergangsbereich (ZT) ab dem Anzeigebereich(ZE) hin zum Umfangsbereich (ZP) in jeder Richtung, die den Anzeigebereich mit dem Umfangsbereich verbindet, derart ist, dass die Kurve, die durch den Wert der diffusen Lichtreflexion an der Verbindungsstelle des Übergangsbereichs mit dem Anzeigebereich und durch das oder jedes lokale Minimum der Evolution der diffusen Lichtreflexion ($RL_{diff}(ZT)$) in dem Übergangsbereich hindurchgeht, abnimmt.

4. Geschichtetes Element nach einem der Ansprüche 1 oder 2, **dadurch gekennzeichnet, dass** die Evolution der diffusen Lichtreflexion ($RL_{diff}(ZT)$) in dem Übergangsbereich (ZT) ab dem Anzeigebereich(ZE) hin zum Umfangsbereich (ZP) in jeder Richtung, die den Anzeigebereich mit dem Umfangsbereich verbindet, kontinuierlich abnimmt.

5. Geschichtetes Element nach einem der Ansprüche 1 oder 2, **dadurch gekennzeichnet, dass** die Evolution der diffusen Lichtreflexion ($RL_{diff}(ZT)$) in dem Übergangsbereich (ZT) ab dem Anzeigebereich(ZE) hin zum Umfangsbereich (ZP) in jeder Richtung, die den Anzeigebereich mit dem Umfangsbereich verbindet, mittels mindestens einer Stufe abnimmt, für die die diffuse Lichtreflexion an jedem Punkt der Stufe streng kleiner ist als die diffuse Lichtreflexion an jedem Punkt des Anzeigebereichs und einer gegebenenfalls vorhergehenden Stufe, die näher an dem Anzeigebereich ist.

6. Geschichtetes Element nach einem der Ansprüche 1 oder 2, **dadurch gekennzeichnet, dass** in jeder Richtung, die den Anzeigebereich (ZE) mit dem Umfangsbereich (ZP) verbindet, der Übergangsbereich mindestens zwei aufeinanderfolgende Regionen (R0, R1, R2) auf dem Weg von dem Anzeigebereich hin zum Umfangsbereich umfasst, wobei jede Region durch die Kombination der zwei Teile gebildet wird, die einen ersten Teil (R10, R11, R12) näher an dem Anzeigebereich und einen zweiten Teil (R20, R21, R22) näher an dem Umfangsbereich umfassen, wobei die mittlere diffuse Lichtreflexion des ersten Teils streng kleiner ist als die mittlere diffuse Lichtreflexion des zweiten Teils, wobei die aufeinanderfolgenden Regionen (R0, R1, R2; R'0, R'1) auf dem Weg hin zum Umfangsbereich eine Verteilung zunehmend zugunsten des ersten Teils aufweisen.

7. Geschichtetes Element nach einem der vorstehenden Ansprüche, **dadurch gekennzeichnet, dass** in jeder Richtung, die den Anzeigebereich (ZE) mit dem Umfangsbereich (ZP) verbindet, die Variation der Unschärfe der Transmission (Haze T(ZT)) des Übergangsbereichs (ZT) kleiner oder gleich 0,7 %/mm ist.

8. Transparentes geschichtetes Element nach einem der vorstehenden Ansprüche, **dadurch gekennzeichnet, dass** in jeder Richtung, die den Anzeigebereich (ZE) mit dem Umfangsbereich (ZP) verbindet, die Variation der Klarheit (C(ZT)) des Übergangsbereichs (ZT) kleiner oder gleich 0,5 %/mm ist.

9. Geschichtetes Element nach einem der vorstehenden Ansprüche, **dadurch gekennzeichnet, dass** ein erster Parameter aus der mittleren quadratischen Steigung ($Rdq(ZT)$) und der Gesamtlichtreflexion ($RL(ZT)$) der Mittelschicht (3T) des Übergangsbereichs (ZT) konstant und gleich dem entsprechenden Parameter der Mittelschicht (3E) des Anzeigebereichs(ZE) ist, während der zweite Parameter aus der mittleren quadratischen Steigung ($Rdq(ZT)$) und der Gesamtlichtreflexion ($RL(ZT)$) der Mittelschicht (3T) des Übergangsbereichs (ZT) kleiner oder gleich dem entsprechenden Parameter der Mittelschicht (3E) des Anzeigebereichs(ZE) ist und in jeder Richtung, die den Anzeigebereich mit dem Umfangsbereich verbindet, ab dem Anzeigebereich(ZE) hin zum Umfangsbereich (ZP) eine abnehmende Evolution aufweist.

10. Geschichtetes Element nach einem der vorstehenden Ansprüche, **dadurch gekennzeichnet, dass** in jeder Richtung, die den Anzeigebereich (ZE) mit dem Umfangsbereich (ZP) verbindet, die Evolution der mittleren quadratischen Steigung ($Rdq(ZT)$) der Mittelschicht (3T) des Übergangsbereichs (ZT) eine Variation kleiner als oder gleich 3,5°/mm, vorzugsweise kleiner oder gleich 3°/mm, noch mehr bevorzugt kleiner oder gleich 2°/mm, aufweist.

11. Geschichtetes Element nach einem der vorstehenden Ansprüche, **dadurch gekennzeichnet, dass** in jeder Richtung, die den Anzeigebereich (ZE) mit dem Umfangsbereich (ZP) verbindet, die Evolution der diffusen Gesamtlichtreflexion (RL(ZT)) der Mittelschicht (3T) des Übergangsbereichs (ZT) eine Variation kleiner oder gleich (20 %)RL(ZE)/mm aufweist, wobei RL(ZE) die mittlere Gesamtlichtreflexion des Anzeigebereichs ist.

12. Geschichtetes Element nach einem der Ansprüche 1 bis 11, **dadurch gekennzeichnet, dass** die Mittelschicht (3T) des Übergangsbereichs (ZT) einen Brechungsindex (n3T) gleich dem Brechungsindex (3nE) der Mittelschicht (3E) des Anzeigebereichs(ZE) aufweist, wobei die Evolution der Gesamtlichtreflexion (RL(ZT)) der Mittelschicht (3T) des Übergangsbereichs (ZT) in jeder Richtung, die den Anzeigebereich mit dem Umfangsbereich verbindet, ab dem Anzeigebereich(ZE) hin zum Umfangsbereich (ZP), durch Abnahme der Dicke (e3T) der Mittelschicht (3T) ab dem Anzeigebereich hin zum Umfangsbereich, abnimmt.

13. Geschichtetes Element nach einem der Ansprüche 1 bis 11, **dadurch gekennzeichnet, dass** die Mittelschicht (3T) des Übergangsbereichs (ZT) eine Dicke (e3T) gleich der Dicke (e3E) der Mittelschicht (3E) des Anzeigebereichs(ZE) aufweist, wobei die Evolution der Gesamtlichtreflexion (RL(ZT)) der Mittelschicht (3T) des Übergangsbereichs (ZT) in jeder Richtung, die den Anzeigebereich mit dem Umfangsbereich verbindet, ab dem Anzeigebereich(ZE) hin zum Umfangsbereich (ZP) durch Variation des Brechungsindex (n3T) der Mittelschicht (3T) ab dem Anzeigebereich hin zum Umfangsbereich abnimmt.

14. Geschichtetes Element nach einem der vorstehenden Ansprüche, **dadurch gekennzeichnet, dass** das geschichtete Element ($10_1$, $10_2$, $10_3$, $10_4$, $10_5$, $10_6$) eine flexible Filmbeschichtung ist.

15. Transparente Verglasung (1), umfassend ein geschichtetes Element ($10_1$, $10_2$, $10_3$, $10_4$, $10_5$, $10_6$) nach einem der vorstehenden Ansprüche.

16. Transparente Verglasung nach Anspruch 15, **dadurch gekennzeichnet, dass** sie ferner mindestens eine gegen das geschichtete Element positionierte zusätzliche Schicht umfasst, vorzugsweise gewählt aus:

   - transparenten Substraten, gewählt aus Polymeren, Gläsern oder Keramiken, umfassend zwei glatte Hauptoberflächen,
   - an Formgebungsvorgänge angepasste härtbare Materialien, anfangs in einem viskosen, flüssigen oder pastenförmigen Zustand, insbesondere eine Sol-Gel-Schicht,
   - Trennblättern auf Basis von insbesondere thermoformbarem oder druckempfindlichem Polymermaterial.

17. Transparente Verglasung nach einem der Ansprüche 15 oder 16, **dadurch gekennzeichnet, dass** sie mindestens eine Antireflex-Beschichtung (7) an der Grenzfläche zwischen der Luft und dem Material umfasst, das die Schicht ausmacht, die eine externe Hauptoberfläche der Verglasung bildet, die dazu bestimmt ist, bezüglich eines Projektors bei der Projektion von Bildern auf den Anzeigebereich (ZE) gegenüber zu liegen.

## Claims

1. A transparent layered element ($10_1$, $10_2$, $10_3$, $10_4$, $10_5$, $10_6$) comprising two transparent outer layers (2, 4) having approximately the same refractive index (n2, n4) and each having a smooth outer main surface (2A, 4A), the layered element comprising:

   - a screen zone (ZE) with properties of diffuse reflection and specular transmission comprising a textured middle layer (3E) interposed between the outer layers (2, 4), which defines textured contact surfaces, parallel to one another, having a mean square slope Rdq strictly greater than 0.2°, the middle layer (3E) of the screen zone comprising at least one transparent layer with a refractive index (n3E) different from that of the outer layers or a metallic layer, and
   - a peripheral zone (ZP) with properties of specular reflection and specular transmission,

   **characterized in that** the layered element comprises a transition zone (ZT) with properties of diffuse reflection and specular transmission between the screen zone (ZE) and the peripheral zone (ZP), the transition zone comprising a textured middle layer (3T) interposed between the outer layers (2, 4), which defines textured contact surfaces, parallel to one another, having a mean square slope Rdq strictly greater than 0.2°, the middle layer (3T) of the transition zone comprising at least one transparent layer with a refractive index (n3T) different from that of the outer layers or a metallic layer, and **in that** the diffuse light reflection ($RL_{diff}(ZT)$) at any point of the transition zone is less than or equal to the diffuse light reflection ($RL_{diff}(ZE)$) at any point of the screen zone and the variation of the diffuse light reflection ($RL_{diff}(ZT)$) in the transition zone from the screen zone to the peripheral zone, in any direction joining the screen zone to the peripheral zone, is decreasing or such that the curve passing through the value of diffuse light reflection at the junction of the transition zone with the screen zone and through the or each local maximum of the variation of the diffuse light reflection ($RL_{diff}$(ZT)) in the transition zone is decreasing, the decrease in the variation of the diffuse light reflection ($RL_{diff}$(ZT)) in the transition zone, or the curve passing through the or each local maximum of the variation of the diffuse light reflection ($RL_{diff}$(ZT)) in the transition zone, being obtained by varying at least one parameter from the mean square slope (Rdq(ZT)) and the total light reflection (RL(ZT)) of the middle layer (3T) of the transition zone (ZT), in any direction joining the screen zone (ZE) to the peripheral zone (ZP).

2. The layered element as claimed in claim 1, **characterized in that**, in any direction joining the screen zone (ZE) to the peripheral zone (ZP), the variation of the diffuse light reflection ($RL_{diff}$(ZT)) in the transition zone (ZT) is less than or equal to (20%)RL(ZE)/mm, where RL(ZE) is the mean total light reflection of the screen zone.

3. The layered element as claimed in either of claims 1 and 2, **characterized in that** the variation of the diffuse light reflection ($RL_{diff}$(ZT)) in the transition zone (ZT) from the screen zone (ZE) to the peripheral zone (ZP), in any direction joining the screen zone to the peripheral zone, is such that the curve passing through the value of diffuse light reflection at the junction of the transition zone with the screen zone and through the or each local minimum of the variation of the diffuse light reflection ($RL_{diff}$(ZT)) in the transition zone is decreasing.

4. The layered element as claimed in either of claims 1 and 2, **characterized in that** the variation of the diffuse light reflection ($RL_{diff}$(ZT)) in the transition zone (ZT) decreases continuously from the screen zone (ZE) to the peripheral zone (ZP), in any direction joining the screen zone to the peripheral zone.

5. The layered element as claimed in either of claims 1 and 2, **characterized in that** the variation of the diffuse light reflection ($RL_{diff}$(ZT)) in the transition zone (ZT) is decreasing from the screen zone (ZE) to the peripheral zone (ZP), in any direction joining the screen zone to the peripheral zone, by at least one step for which the diffuse light reflection at any point of the step is strictly less than the diffuse light reflection at any point of the screen zone and of any preceding step closer to the screen zone.

6. The layered element as claimed in either of claims 1 and 2, **characterized in that**, in any direction joining the screen zone (ZE) to the peripheral zone (ZP), the transition zone (ZT) comprises at least two successive regions (R0, R1, R2) going from the screen zone to the peripheral zone, each region being formed by combining two portions comprising a first portion (R10, R11, R12) closer to the screen zone and a second portion (R20, R21, R22) closer to the peripheral zone, where the mean diffuse light reflection of the first portion is strictly less than the mean diffuse light reflection of the second portion, the successive regions (R0, R1, R2; R'0, R'1) having a distribution more and more in favor of the first portion on approaching the peripheral zone.

7. The layered element as claimed in any one of the preceding claims, **characterized in that**, in any direction joining the screen zone (ZE) to the peripheral zone (ZP), the variation of the blurring in transmission (Haze T(ZT)) of the transition zone (ZT) is less than or equal to 0.7%/mm.

8. A transparent layered element as claimed in any one of the preceding claims, **characterized in that**, in any direction joining the screen zone (ZE) to the peripheral zone (ZP), the variation of the clarity (C(ZT)) of the transition zone (ZT) is less than or equal to 0.5%/mm.

9. The layered element as claimed in any one of the preceding claims, **characterized in that** a first parameter from the mean square slope (Rdq(ZT)) and the total light reflection (RL(ZT)) of the middle layer (3T) of the transition zone (ZT) is constant and equal to the corresponding parameter of the middle layer (3E) of the screen zone (ZE), whereas the second parameter from the mean square slope (Rdq(ZT)) and the total light reflection (RL(ZT)) of the middle layer (3T) of the transition zone (ZT) is less than or equal to the corresponding parameter of the middle layer (3E) of the screen zone (ZE) and has a variation decreasing from the screen zone (ZE) to the peripheral zone (ZP), in any direction joining the screen zone to the peripheral zone.

10. The layered element as claimed in any one of the preceding claims, **characterized in that**, in any direction joining the screen zone (ZE) to the peripheral zone (ZP), the variation of the mean square slope (Rdq(ZT)) of the middle layer (3T) of the transition zone (ZT) has a variation less than or equal to 3.5°/mm, preferably less than or equal to 3°/mm, more preferably less than or equal to 2°/mm.

11. The layered element as claimed in any one of the preceding claims, **characterized in that**, in any direction joining the screen zone (ZE) to the peripheral zone (ZP), the variation of the total light reflection (RL(ZT)) of the middle layer (3T) of the transition zone (ZT) has a variation less than or equal to (20%)RL(ZE)/mm, where RL(ZE) is the mean total light reflection of the screen zone.

12. The layered element as claimed in any one of claims 1 to 11, **characterized in that** the middle layer (3T) of the transition zone (ZT) has a refractive index (n3T) equal to the refractive index (n3E) of the middle layer (3E) of the screen zone (ZE), the variation of the total light reflection (RL(ZT)) of the middle layer (3T) of the transition zone (ZT) being decreasing from the screen zone (ZE) to the peripheral zone (ZP), in any direction joining the screen zone to the peripheral zone, by decrease of the thickness (e3T) of the middle layer (3T) from the screen zone to the peripheral zone.

13. The layered element as claimed in any one of claims 1 to 11, **characterized in that** the middle layer (3T) of the transition zone (ZT) has a thickness (e3T) equal to the thickness (e3E) of the middle layer (3E) of the screen zone (ZE), the variation of the total light reflection (RL(ZT)) of the middle layer (3T) of the transition zone (ZT) being decreasing from the screen zone (ZE) to the peripheral zone (ZP), in any direction joining the screen zone to the peripheral zone, by variation of the refractive index (n3T) of the middle layer (3T) from the screen zone to the peripheral zone.

14. The layered element as claimed in any one of the preceding claims, **characterized in that** the layered element ($10_1$, $10_2$, $10_3$, $10_4$, $10_5$, $10_6$) is a flexible film.

15. A transparent glazing (1) comprising a layered element ($10_1$, $10_2$, $10_3$, $10_4$, $10_5$, $10_6$) as claimed in any one of the preceding claims.

16. The transparent glazing as claimed in claim 15, **characterized in that** it further comprises at least one additional layer positioned against the layered element, preferably selected from:

   - transparent substrates selected from polymers, glasses or ceramics comprising two smooth main surfaces,
   - hardenable materials initially in a viscous, liquid or pasty state suitable for forming operations, in particular a sol-gel layer,
   - interposed lamellae based on polymer material, in particular thermoformable or pressure-sensitive.

17. The transparent glazing as claimed in either of claims 15 and 16, **characterized in that** it comprises at least one antireflective coating (7) at the interface between the air and the material constituting the layer forming an outer main surface of the glazing intended to be opposite relative to a projector during projection of images on the screen zone (ZE).

**Fig. 1**

**Fig.4a**

**Fig.4b**

**Fig.5a**

**Fig.5b**

## Fig. 2

1(ZE)

10(ZE)

-n4-

-n2-

7
6
4A
4
2B
3E
4B
2
2A

P

## Fig. 3

1(ZE)

10(ZE)

-n4-

-n2-

7
6
4A
4
2B
$3_2E$
$3_1E$
2
4B
5

2A

P

## Fig. 6a

## Fig. 6b

## Fig.7a

## Fig.7b

# Fig.8a

# Fig.8b

# Fig.9

Fig.10a

Fig.10b

**RÉFÉRENCES CITÉES DANS LA DESCRIPTION**

**Documents brevets cités dans la description**

- WO 2013175129 A1